(19) **Europäisches Patentamt / European Patent Office / Office européen des brevets**

(11) **EP 3 853 308 B1**

(12) **EUROPEAN PATENT SPECIFICATION**

(45) Date of publication and mention of the grant of the patent:
**13.11.2024 Bulletin 2024/46**

(21) Application number: **19863125.1**

(22) Date of filing: **13.09.2019**

(51) International Patent Classification (IPC):
**C09D 5/16** *(2006.01)*  **B81C 1/00** *(2006.01)*
**C09D 5/00** *(2006.01)*  **G03F 1/00** *(2012.01)*
**G03F 7/00** *(2006.01)*  **G03F 9/00** *(2006.01)*

(52) Cooperative Patent Classification (CPC):
**B32B 1/00**

(86) International application number:
**PCT/TH2019/000040**

(87) International publication number:
**WO 2020/060497 (26.03.2020 Gazette 2020/13)**

(54) **MATERIALS WITH PATTERN ARRAY FOR ANTIFOULING SURFACE**

MATERIALIEN MIT MUSTERANORDNUNG FÜR ANTIFOULING-OBERFLÄCHE

MATÉRIAUX DOTÉS D'UN RÉSEAU DE MOTIFS POUR SURFACE ANTISALISSURE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.09.2018 TH 1801005675**
**20.09.2018 TH 1801005676**
**06.09.2019 TH 1903002291 U**

(43) Date of publication of application:
**28.07.2021 Bulletin 2021/30**

(73) Proprietor: **National Science and Technology Development Agency**
**PathumThani 12120 (TH)**

(72) Inventors:
• **ATTHI, Nithi**
**Luang Pathumthani, 12120 (TH)**

• **SRIPUMKHAI, Witsaroot**
**Luang Pathumthani, 12120 (TH)**
• **PATTAMANG, Pattaraluck**
**Luang Pathumthani, 12120 (TH)**
• **JEAMSAKSIRI, Wutthinan**
**Luang Pathumthani, 12120 (TH)**

(74) Representative: **Finnegan Europe LLP**
**1 London Bridge**
**London SE1 9BG (GB)**

(56) References cited:
**WO-A1-2017/025128  WO-A1-2018/197858**
**WO-A2-2010/022107  WO-A2-2018/085376**
**US-A1- 2006 024 508  US-A1- 2010 126 404**
**US-A1- 2011 077 172  US-A1- 2015 344 652**
**US-A1- 2018 229 420**

## Description

### Field of the invention

The disclosure is directed to materials and processes for forming an antifouling surface.

### Background of the invention

Biofouling on the engineering structure surface such as underwater construction, medical devices and the material surface on any other industry applications has a global impact to economic, financial and health risk. G. D. Bixler and B. Bhushan, "Biofouling: lessons from nature", Phil. Trans. R. Soc., A 370, pp. 2381-2417 (2012). In a marine environment, more than 4,000 species of creatures can adhere to an underwater surface such as ship's hull, oil and gas transportation pipes and column of oil rig platform under seawater environment. Typically, the initial state of fouling mechanism of living species on the material surface begin with the adhesion of *Ulva australis, Ectocarpus, Bacteria* and hard-shell barnacles. Those species will create a thin biofilm on the top of material surface. Later, the accumulation of living things on the material surface causes the ship's hull to drag. The adhesion of micro-foulants having sizes less than 100 microns can increase friction forces by 1 to 2 percent.

In the case of the adhesion of macro-foulants, which is a size greater than 1.0 millimeters, can increase friction forces by 10 to 40 percent. High friction forces lead to the increasing of fuel consumption around 10 to 15 percent, higher stress on the engine and also increasing of the $CO_2$, $NO_x$ and $SO_2$ gas emission to the atmosphere that leads to greenhouse effects and global warming. Moreover, the accumulation of barnacle on an oil rig platform column can increase weight and diameter of the column, which generates high friction forces of the tide. This can complicate water flow calculation, which can lead to a large error of the prediction of the preventive maintenance schedule of the oil rig platform.

Moreover, barnacle adhesion on marine surfaces generate a high corrosion rate due to pitting. In addition, the adhesion of various species of living things on a ship's hull causes a cross-bio contamination and migration that leads to unbalance of the ecosystem. J.A. Callow and M.E. Callow, "Trends in the development of environmentally friendly fouling-resistant marine coatings", Nature Communications, 2, pp. 1-10 (2011). DOI: 10.1038/ncomms1251.

In addition to the problems mentioned for a marine environment, the fouling of micro-organism on the surface of medical equipment, such as prosthetic implants, biosensors, catheters and dental implants can cause infectious diseases that lead to increasing death rate in the U.S. by more than 45 percent. It has been estimated that more than 5,000 patients have died during medical treatment process due to the infection.

The fouling of the micro-organism on the engineering structure of the industrial such as power plants, water treatment plant and food & beverage industries causes a high production cost and high maintenance cost due to pipe blockage, membrane flux decrease, high water contamination and reduce a heat-exchanger efficiency reduce.

To address the foregoing problems with surface fouling, various methodologies have been tried. Currently, the prevention of the barnacle fouling on the ship hull drag surface and other engineering construction under seawater environment such as oil rig platform can be done by two main methods (1) Biocide paint coating and (2) Antifouling coating. In the past decades, biocide paint is one of the most effective ways to prevent the barnacle fouling. However, high toxic component in the biocide paint called Tributyltin (TBT) has been found to severely damage the aqua ecosystem around the world as it also kills non-target organisms. Therefore, the International Maritime Organization (IMO) has banned the global use of biocide paint that contains TBT since 2003. B. Antizar-Ladislao, "Environmental levels, toxicity and human exposure to tributyltin (TBT)-contaminated marine environment. A review", Environ. Int., 34 (2), pp. 292-308 (2008). DOI: 10.1016/j .envint.2007.09.005.

Therefore, various non-toxic coating technologies such as superhydrophobic coating were introduced to prevent barnacle fouling. In addition, the utilization of the water jet cleaning is one of the most effective way to remove the settled barnacles from the ship hull and construction surface. However, the diving in the deep seawater environment is extremely dangerous and expensive.

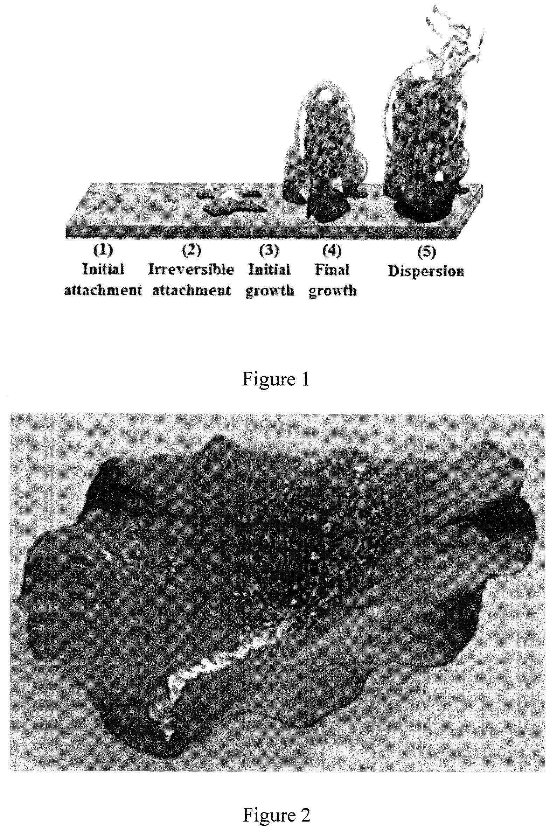

The mechanism of the fouling of micro and macro-organisms is shown in Fig. 1. First, the micro-organism emit the slime (glue) onto the material surface to generate a biofilm in the "Initial attachment stage". After the thin layer of organic substance such as biofilm is settled, the seaweeds, bacteria and embryo of the barnacles can subsequently settled on the material surface during "Irreversible attachment stage".

Later, the settled organism begin to grow and increase the population in the "Initial growth stage" and reach the saturation point for growing in the "Final growth stage". Due to the heavy weight and the size of the settled organisms, some of the organisms start to release from the surface and also release the embryo to the environment for the breeding in the "Dispersion stage". It can be concluded that the prevention of the biofouling on the material surface can be obtained by prevention of the adhesion of proteins or biofilm in the initial attachment stage.

One of the most effective antifouling technologies is a "superhydrophobic surface". This technology provides a low surface energy surface with slippery properties than can prevent the adhesion of slime and also prevent the coating of the biofilm on the surface in the initial attachment stage. As a result of the biofilm not being deposited, the resulting fouling stages will not occur. J. Genzer and K. Efimenko, "Recent developments in superhydrophobic surfaces and their relevance to marine fouling" A review", Biofouling, 22 (5), pp. 3 3 9 - 3 6 0 ( 2 0 0 6 ). DOI: 10.1080/08927010600980223. I. Banerjee, R.C. Pangule, and R.S. Kane, "Antifouling coatings: Recent developments in the design of surfaces that prevent fouling by proteins, bacteria, and marine organisms", Adv. Mater., 23, pp. 690-718 (2011). DOI: 10.1002/adma.201001215.

Typically, a superhydrophobic surface can be generated by the biomimetic of the natural structures. The superhydrophobic surface is comprised of two main components (1) surface roughness by using micro/nano-structure and (2) low surface energy of materials. T. Vladkova, D. Akuzov, A. Kloppel, and F. Brummer, "Current approaches to reduction of marine biofilm formation", J. Chem. Technol. and Metallurgy, 49 (4), pp. 345-355 (2014).

The superhydrophobic coating can be applied on the surface of materials used in engineering construction and under seawater environment to reduce barnacle attachment. Moreover, it can be coated on the outer surface of the medical devices such as Micro-electro Mechanical Systems (MEMS) sensors and reduce the amount of the bacteria accumulation. M. V. Graham and N. C. Cady, "Nano and microscale topographies for the prevention of bacterial surface fouling", Coatings, 4, pp. 37-59 (2014). DOI:10.3390/coatings4010037.

For the industrial applications, coating of superhydrophobic film on the surface can increases productivity. For example, the coating of superhydrophobic film on the condenser of a power plant can increase the rate of the conversion of the mist and vapor to become the water droplets rapidly without the water droplets attaching to the condensers. Therefore, the cycling of the vapor-to-water conversion and the loss rate of the water in the system are significantly decreased, which leads to lower-cost and higher-efficiency in electricity production.

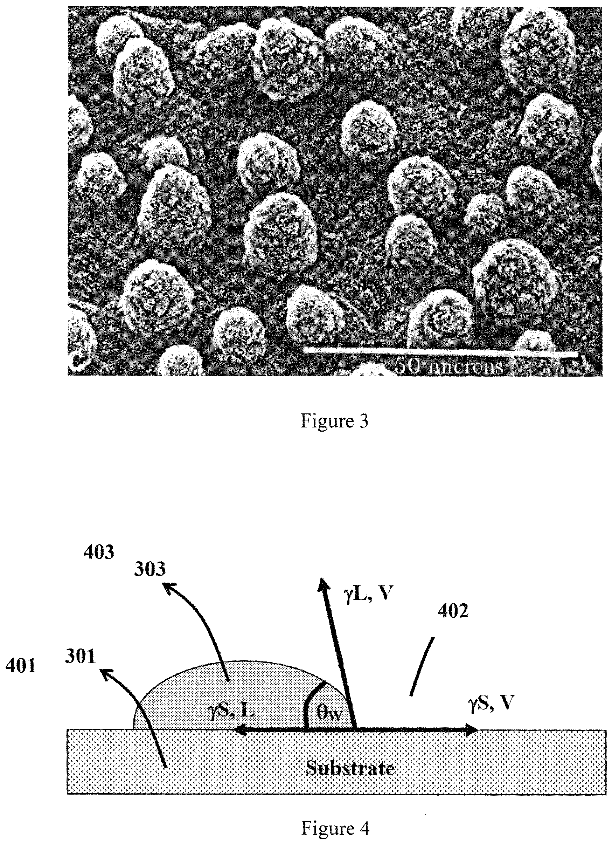

It is well realized that the surface of the lotus leaf is superhydrophobic, which has a water contact angle (WCA) of 150 degrees or greater that generate a water repellent surface as shown in Fig. 2. In recent years, there were many techniques employed to fabricate a multi-scaled roughness so as to mimic surface feature of the lotus leaf to obtain superhydrophobic properties on the surface. The structure of a lotus leaf is comprised of small nubs with the size of 5 to 20 micron and arrange in array with the space between the nubs of 20 to 40 micron. The outer surface of the nub is covered with wax layer with the thickness of nanometer scale as shown in Fig. 3. W. Barthlott (1990), Scanning electron microscopy of the epidermal surface in plants, In: Claugher, D. (ed.) Application of the scanning EM in taxonomy and functional morphology. Systematics Association's Special Volume, Oxford: Clarendon Press, pp. 69-94. The superhydrophobic properties of the lotus leaf generates a self-cleaning surface, which the water droplet can roll-off and remove the particles and contaminations from the surface.

The characteristic of water droplet movement on the surface can be determined by using water contact angle (WCA), $\theta$, which is related to the surface energy ($\gamma_S$) of liquid and surface. Various surface tensions is shown in Fig. 4. (1) Surface tension between liquid and surface (401), (2) surface tension force between surface and air (402), (3) surface tension force between liquid and air (403). The relationship between three different surface tension can be explained in term of contact angle of a liquid on a flat surface, $\theta_y$, that can be given by Young's equation in Eq. (1).

$$COS\theta = \frac{\gamma_S - \gamma_{SL}}{\gamma_L} \qquad\qquad (1)$$

Where $\theta$ is contact angle of the flat surface, $\gamma_S$ is the surface tension of solid, $\gamma_L$, is the surface tension of liquid and $\gamma_{SL}$, is the surface tension between solid and liquid interface.

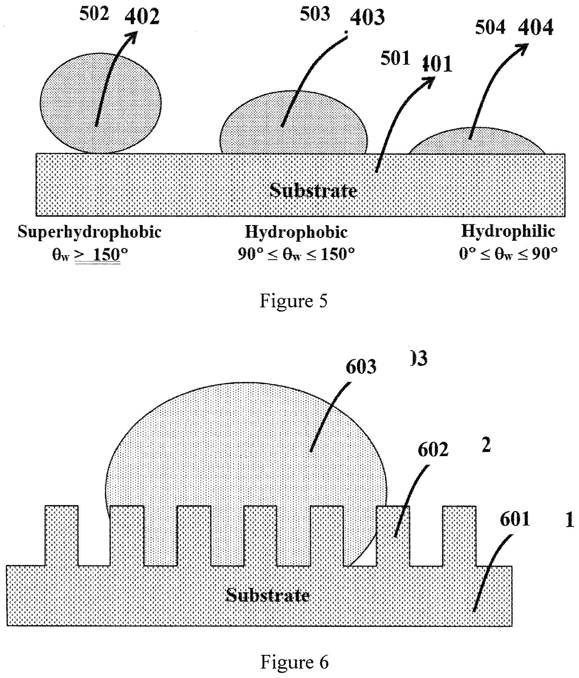

Based on the Young's equation, the adhesion of the water droplet can be categorized into the following three different types as shown in Fig. 5: (1) If the WCA on surface 501 is less than 90 degree, it is hydrophilic surface (504); (2) If the WCA on surface 501 is between 90 to 150 degrees, it is hydrophobic surface (503); and (3) If the WCA on surface 501 is greater than 150 degrees, it is superhydrophobic surface (502).

Based on Young's equation, the maximum water contact angle on the flat surface is not greater than 120 degrees. This means, flat surface of low surface energy materials cannot be obtained superhydrophobic property. M. Ma and M.H. Randal (2006). Superhydrophobic surfaces, Current opinion in colloid & interface science, 11, pp. 193-202. Moreover, the repellent properties of other liquids on the surface such as lyophobic surface. See, e.g., U.S. Patent No. 6,852,390 B2. In addition, as shown in US2005/0181195 A1, amphiphobic surface is also difficult to obtain.

Later on, Robert N. Wenzel had developed a Young's model to calculate the water contact angle on the rough surface by using surface roughness factor [R] to explain the adhesion of the water droplet on the surface as shown in Fig. 6. Based on the assumption of that the rough surface (601), which comprises of micro-pillar (602) has the same behavior as the rough surface. Therefore, the water droplet can contact to the whole area of pillar due to there is no air trap in the space area between the pillars (603). The water contact angle of the rough square asperities surface can be calculated by using Eq. 2 and Eq. 3 [13] R. N. Wenzel, (1936) Resistance of solid surfaces to wetting by water, Indus. and Eng.

Chem., 28 (8), pp. 988-994.

$$COS\theta_{W} = \frac{r(\gamma_S - \gamma_{SL})}{\gamma_L} = r\cos\theta \qquad (2)$$

$$r = \frac{1+2h}{a+b} \qquad (3)$$

Where $\theta_W$ is the water contact angle of Wenzel's model, $\theta$ is the water contact angle on the flat surface, $\gamma_S$ is the surface tension of solid, $\gamma_L$, is the surface tension of liquid, $\gamma_{SL}$ is the surface tension between the solid and liquid interface, $r$ is the surface roughness factor, $a$ is the size of the micro-structure that contact with the water droplet, $b$ is the size of the micro-structure that did not contact with the water droplet, $h$ is the height of the micro-structure.

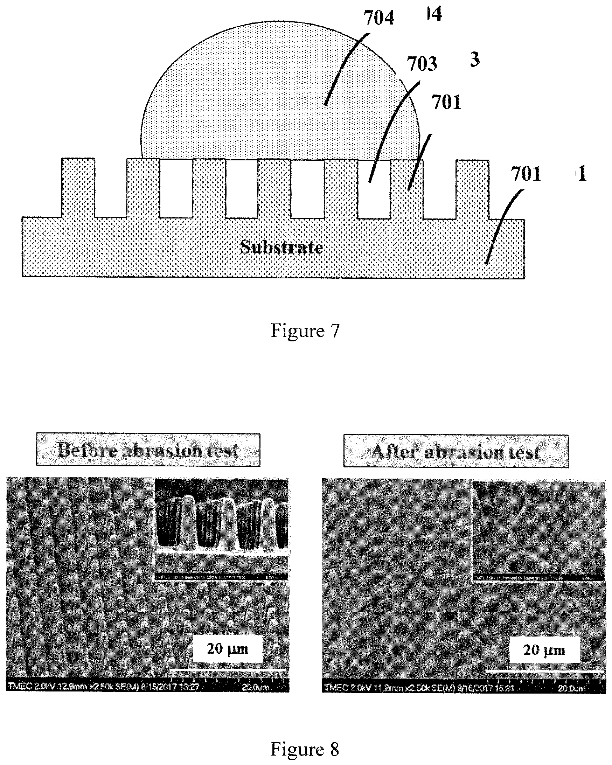

On the other hand, Cassie and Baxter have proposed a model to explain the water contact angle on the rough surface (Cassie and Baxter's model) as shown in Fig. 7. Cassie, A. and Baxter, S., (1944), "Wettability of porous surfaces", Trans. Faraday Soc., 40, pp. 546-555. The assumption is that the flat surface (701) that comprises of micro/nano-square asperities (pillar) (702) acts like a rough surface. However, the space between square asperities contain an air trap, which repel the water droplet (704) to prevent the contact of water droplet in that rough surface area. The air trap in the space of pillar asperities can obtain higher water contact angle greater than the one that calculated by Wenzel's model, which can calculated by Eq. 4 and Eq. 5.

$$\cos\theta' = f\cos\theta + f - 1 \qquad (4)$$

$$f = \frac{\sum a}{\sum a / \sum (a+b)} \qquad (5)$$

Where $\theta'$ is the liquid contact angle on rough surface by Cassie's model, $\theta$ is the liquid contact angle on flat surface, $f$ is the fraction of the area that contact to the liquid droplet to the area that did not contact to the liquid droplet (shadow area). $a$ is the total surface area that contact to the liquid droplet and $b$ is the total surface area that did not contact to the liquid droplet.

The fabrication of hydrophobic and superhydrophobic surface by mimicking the natural structure can be obtained by two main processes:

(1) Modifying the surface of low energy materials to have high surface roughness; and
(2) Modifying the flat surface to have surface roughness and coated with low surface energy materials

In case of the surface texturing method to produce high surface roughness on low surface energy material, typically, the low surface energy for superhydrophobic surface is fluorocarbon substance such as Teflon, Polytetrafluoroethylene (PTFE), Fluorinated ethylene propylene (FEP), Ethylene tetrafluoroethylene (ETFE), Ethylene chloro-trifluoroethylene (ECTFE), Perfluoro-alkoxyalkane (PFA) and Poly-vinylidene fluoride (PVDF). J. L. Zhang, et. al., Macromol. Rapid Commun., 25, 1105 (2004) and US Published Patent Application No. 2007/0005024 A1. The silicone substance such as Polydimethylsiloxane (PDMS). M. T. Khorasani, et. al., Appl. Surf. Sci., 242, 339 (2005), polymer such as Polyethylene (PE). X. Y. Lu, et. al., Macromol. Rapid Commun., 25, 1606 (2004), Ceramic substance such as Zinc oxide ($ZnO_2$). X. J. Feng, et. al., J. Am. Ceram. Soc., 126, 62 (2004) and Titanium dioxide ($TiO_2$). X. J. Feng, et al., Angew. Chem. Int. Ed., 44, 5115 (2005).

In case of second approach that fabricate the rough surface and coat the low surface energy material on its surface. The rough surface can be obtained by fabricating a micro/nano-structure on the material surface. The micro/nano-structure can be micro/nano-scale asperities (Pillar pattern) or micro/nano-scale cavity (Hole pattern) by various fabrication methods including (1) Fabrication of micro-scale asperities and micro-scale cavity on high surface energy material. (1) Photolithography process, PCT number WO 02/084340, (2) Nanomachining, US Patent 2002/00334879, (3) Microstamping US Patent 5,725,788 and 6,444,254, (4) Microcontact printing US Patent 5,900,160, (5) Self-assembling metal colloid monolayers, US Patent 5,609,907, (6) Atomic force microscopy nanomachining and nano-indentation, US Patent 5,252,835, (7) Sol-gel molding), US Patent 6,530,554 (8) Self-assembled monolayer directed patterning, US Patent 6,518,168, (9) Wet chemical etching, US Patent 6,514,389, (10) Printing with colloidal ink, US Patent 2003/0047822, (11) Carbon nanotube, CNT, US Patent 2002/0098135 and (12) Roll-to-plate nano imprint lithography (R2P-NIL) and Roll-to-roll nano-imprint lithography (R2R-NIL). The relevant teachings of each of these documents is incorporated herein by reference.

The concern parameter of the micro/nano-structure to obtain a superhydrophobic or oleophobic properties is to optimize the pattern size (a), the space between pattern (b), the height of pattern (h), and the ratio between the height and the size of the pattern (Aspect ratio, A.R. = h/a). Moreover, the density of the pattern per unit area (Packing factor, P = b/a) and the pattern arrangement is also a crucial parameter.

Typically, the shape of the pattern is one of the most important parameters. There are many pattern designs that have been reported, including (1) Cubic pillar (a, b, h = 25 $\mu$m), Dynamic wettability switching by surface roughness effect, the 16th IEEE MEMS conference, 2003, (2) Nano-fiber, US Patent 2005/0181195 A1, (3) Micropillar or microporous thin film (Diameter of 0. 1 to 100 micron) that arrange in Honeycomb structure, US Patent 2006/0097361 A1, (4) Sawtooth profile pillar, Smooth profile pillar, Rounded peaks asperities, Rectangular shaped asperities), Cylindrical foundation and a hemispheric peak, Conical asperities, Pyramid asperities and Pyramid asperities comprise a rounded hemispheric peak that arranged in Rectangular packing and Hexagonal packing. US Patent 2006/0078724 A1 and US Patent 7,150,904 B2.

The micro-pillar and micro-porous can be a square shape, cylindrical shape, common asperity rise angle shape, acute angle trapezoid shape, obtuse trapezoid angle shape, square transverse shape that arranged in rectangular array or hexagonal array. US Patent 7,323,033 B2 and [38] US Patent 2007/0224391 A1.

In 2010, A. Brennan et al., invented a hydrophobic surface by mimicking a shark skin pattern. This technology is called "Sharklet pattern" that can be applied for the non-toxic antifouling surface. See, e.g., US Patent 7,650,848 B2 and US Patent 2010/0126404 A1. The sharklet pattern has a size of 1 micron with different pattern length. The space between patterns is in the length of 10 to 100 micron. The Sharklet pattern has arranged in sinusoidal function or Sharklet topology. It was found that when the distance between the patterns is less than the size of the living creature, the antifouling properties will occurr and micro-organisms will not attach on the material surface. However, if the space between patterns is too small, the pattern will act like a flat surface and cannot prevent the attachment of micro-organism on the material surface. Therefore, the suitable distance between the patterns is 25 to 75 percent of the size of the micro-organism. For example, spore of fungi has a size of 2 to 5 micron. Therefore, the size of micro-pattern should be 0.5 to 3.75 micron. Typically, the distance between the patterns is 0.75 to 2.0 micron.

Regarding to the literature review about the superhydrophobic technologies. The methods to fabricate a rough surface on the material can be done by three main approaches: (1) Photolithography and etching process including wet chemical etching and dry plasma etching; (2) Nano-imprint lithography (NIL) and soft lithography process; and (3) Top-down and bottom-up approach methods.

Typically, the roughness on the material surface can be obtained by fabricating pillar asperities pattern or cavity (hole pattern) that has a cross-sectional pattern shape as follows; Sawtooth profile, Smooth profile, Rounded peaks asperities, Rectangular shaped asperities, Cylindrical foundation and a hemispheric peak, Conical asperities, Pyramid asperities, Pyramid asperities comprise a rounded hemispheric peak, Square shape, Cylindrical shape, Common asperity rise angle, Acute angle trapezoid, Obtuse trapezoid angle, Square transverse shape, line pattern, Triangle pattern, Circular shape pattern, Sphere cube pattern, Polygon pattern and Sharklet pattern that arrange in Rectangular array, Square array and Hexagonal array. Those pillar asperities and cavity asperities shapes are able to have both straight sidewall profile and slope sidewall profile.

Typically, the dimension of the micro-structure (a, b, h) should have the size in the range of 100 nanometers to 100 micrometers with the aspect ratio of 0.3 to 10. The value of cosine Young ($\theta_y$) of the materials with flat surface is in the range of -1.0 to +1.0 with a packing factor of 0.5 to 1.0. The popular coating materials on the flat or rough surface to generate a superhydrophobic properties are Teflon, Polydimethylsiloxane (PDMS) and OTS, $C_{18}H_{37}Cl_3Si$.

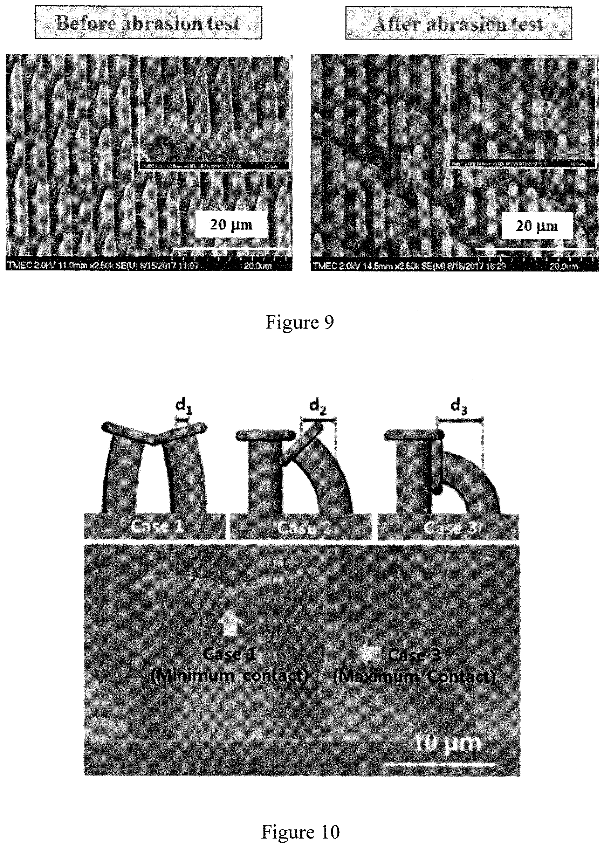

Therefore, the superhydrophobic surface is comprised of pattern to generate a surface roughness and low surface energy materials ($\gamma_s$). However, the fabrication of superhydrophobic surface on flat silicon wafer is not compatible with the real applications due to the fragile and rigid of the silicon. In addition, the high cost of silicon wafers limits their commercialization. Moreover, silicon wafers are not suitable for marine environment and cannot attach on the curvature surface. Hence, low-cost and flexible material such as PDMS is required. The PDMS material has $\theta_y$ of - 0.3289, $\sigma$ of 5 MPa, $\epsilon$ of 116 % and $\tau$ of 1.8 MPa at room temperature. However, PDMS pattern such as pillar pattern (PDMS-PIL) and Sharklet pattern (PDMS-SHK) is prone to clumping and mating with the adjacent micro-patterns when attacked by the external forces such as human hand pressure, weight of the fouling micro-organism and living creator, scratch and corrosion as shown in Fig. 8 and Fig. 9.

The pattern collapsed including pattern clumping and pattern mating can be explained by the adhesion force between the adjacent patterns due to the effects of Van der Waals force ($F_{VDW}$) and Pulling force (P) or called Recovery force as shown in Fig. 10. Fabrication and analysis of enforced dry adhesives with core-shell micropillars", Soft Matter, 9, pp. 1422-1427 (2013). The $F_{VDW}$ is related to the Hamaker constant (A) which in case of PDMS, the Hamaker constant is $4.5 \times 10^{-20}$ J, Contact area (c) and the space between the patterns (b) as shown in Equation 6. The pulling force is related to the displacement of pillars (V), pillar height (h), Young's modulus (E) and Moment of inertia (I) as shown in Fig. 7.

$$F_{vdw} = \frac{Ac}{6\pi b^3}$$ (6)

$$V = \frac{Ph^3}{12EI}$$ (7)

The mating and clumping of micro-pillar will be occurred when the recovery force is less than the Van Der Waal force ($P < F_{vdw}$). This means, the micro-pattern cannot move back to the original position and causes the decreasing of r and h values that leads to the reducing of superhydrophobicity of the surface. Therefore, the prevention of pattern mating and pattern clumping can be obtained by design a micro-structure that have a pulling force larger than Van Der Waal force ($P > F_{vdw}$). One promising micro-structure is the 3D pattern with at least two different pattern heights on the same plane of material surface. It was found that the 3D pattern can reduce a contact area of the adjacent pillars and also increase the displacement of the pillar. Thailand Patent pending 1701003836. However, the 3D pattern also cannot stand with the high pressure force and shear force from the external environment.

WO2010/022107 discloses systems, techniques and applications for nanoscale coating structures and materials that are superhydrophobic with a water contact angle greater than about 140° or 160° and/or superoleophobic with an oil contact angle greater than about 140° or 160°. The nanostructured coatings can include Si or metallic, ceramic or polymeric nanowires that may have a re-entrant or mushroom-like tip geometry. The nanowired coatings can be used in various self-cleaning applications ranging from glass windows for high-rise buildings and non-wash automobiles to pipeline inner surface coatings and surface coatings for biomedical implants.

WO2018/085376 discloses articles including repellent coatings, as well as methods of making as using these articles. The articles can comprise a substrate and a repellent coating disposed on a surface of the substrate. The repellant coating can comprise hydrophobic particles dispersed within a polymer binder. The hydrophobic particles can be aggregated within the polymer binder, thereby forming a multiplicity of re-entrant structures embedded within and protruding from the polymer binder. The repellent coatings, and by extension the articles described herein, can exhibit selective wetting properties (e.g., superhydrophilicty/superoleophobicity, or superhydrophobicity /superoleophilicity).

WO2017/025128 discloses an article having a nanotextured surface with hydrophobic properties. The nanotextured surface comprises an array of pillars defined by a surface fraction (cps) of the pillars, a pitch of the pillars and an aspect ratio of the pillars, wherein: - the surface fraction is equal or greater to 2% and equal or less to 80%; - the pitch is equal or less to 250; - the aspect ratio (H/2R) is equal or less to 2.4, where H is the height of the pillars and R is the radius of the pillars; - the pitch, the height, the radius are expressed in nanometers (nm); - the nanotextured surface comprises at least partially a hydrophobic material.

WO2018/197858 discloses a sapphire substrate having antifouling properties and methods for their preparation and to their use as optical components in devices which transmit or receive light. The sapphire substrates have a micropatterned surface which comprises a plurality of sapphire pillars which project from the surface. The pillars have an aspect ratio less than or equal to about 1.0, and the ratio of the spacing between adjacent pillars to the pillar height is greater than or equal to about 0.5.

To address the problems in the prior art, the present disclosure provides a material for an antifouling surface, said material comprising a unique pattern array including a circular ring pattern with at least two inner stripe and at least four outer stripe supporters (C-RESS) pattern that comprises of the circular ring pattern which is connected to the at least two inner stripe and at least four outer stripe pattern. It has been discovered that when the design parameters including a, b, h, A.R, and P have been optimized, a robust pattern with high surface roughness can obtain superhydrophobic properties for marine, medical and public transportation applications.

## Summary of the invention

In accordance with one aspect of the present invention there is provided a material for an antifouling surface in accordance with claim 1.

Further aspects of the present invention are the subject of the dependent claims

The following detailed description of specific embodiments of the present invention can be best understood when read in conjunction with the drawings enclosed herewith and where like elements are identified by like reference numbers in the several provided views.

**Brief description of the drawings**

Fig. 1: A schematic view illustrating a five stages mechanism of microorganism fouling on the material surface. (1) Initial attachment, Irreversible attachment, (3) Initial growth, (4) Final growth and (5) Dispersion.

Fig. 2: An image of water droplets as they roll-off a lotus leaf.

Fig. 3: A high magnification scanning electron microscopy (SEM) image of the surface of lotus leaf. The lotus leaf comprises small nubs with a diameter of 20 to 40 micron and coated with wax that has a low surface energy.

Fig. 4: A schematic view illustrating the tension forces between each interface that relate to the liquid contact angle calculation by using Young's equation.

Fig. 5: A schematic view illustrating the shape of a water droplet that generates a hydrophilic surface, hydrophobic surface and superhydrophobic surface.

Fig. 6: A schematic view illustrating water droplet that contacts to the rough surface followed by the assumption of Wenzel's model. There is no air trap in the space between pillars and the water droplet is contact to the whole area of the rough surface.

Fig. 7: A schematic view illustrating water droplets that contact the rough surface followed by the assumption of Cassie and Baxter's model. There is an air trap in the space between pillars and the water droplet is not contact to the whole area of the rough surface. The water droplet will contact only the top surface of the micro-asperities and will not contact to the space area between those pillars.

Fig. 8: Cross-sectional scanning electron microscopy (SEM) images of the pillar pattern before and after scratch test with glass slide that move back and forth for 30 times. The size of 2.0 micron and the height of 5.0 micron. The micro-pillar is arranged in square array. The inset images show the SEM images at 5.0 Kx magnifications of the pattern clamping and pattern mating.

Fig. 9: A cross-sectional scanning electron microscopy (SEM) images of the Sharklet pattern before and after scratch test with glass slide that move back and forth for 30 times. The size of 2.0 micron and the height of 5.0 micron. The Sharklet pattern is arranged in square array. The inset images show the SEM images at 5.0 Kx magnifications of the pattern clamping and pattern mating.

Fig. 10: cross-sectional scanning electron microscopy (SEM) image of the clamping and mating of pillar pattern that decreases the roughness factor of the surface and causes the decreasing of water contact angle.

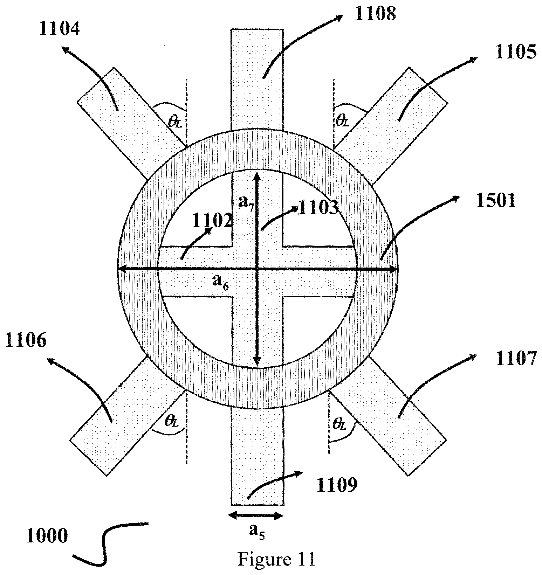

Fig. 11: A graphical illustration of circular ring pattern with inner and outer stripe patterns.

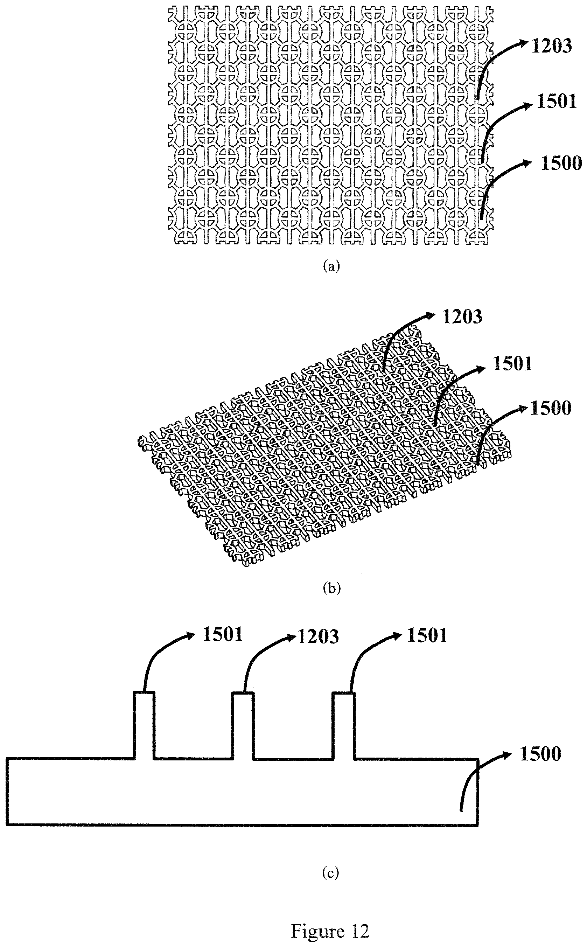

Figs. 12(a) - 12(c): Are graphical illustrations of circular ring pattern with inner and outer stripe patterns that arranged in hexagonal array across the whole area of the sample surface. Figs. 12(a) is a top-view graphical illustration image. Fig. 12(b) is a side view graphical illustration image. Fig. 12(c) is a cross-sectional view graphical illustration image of the dimension of each component.

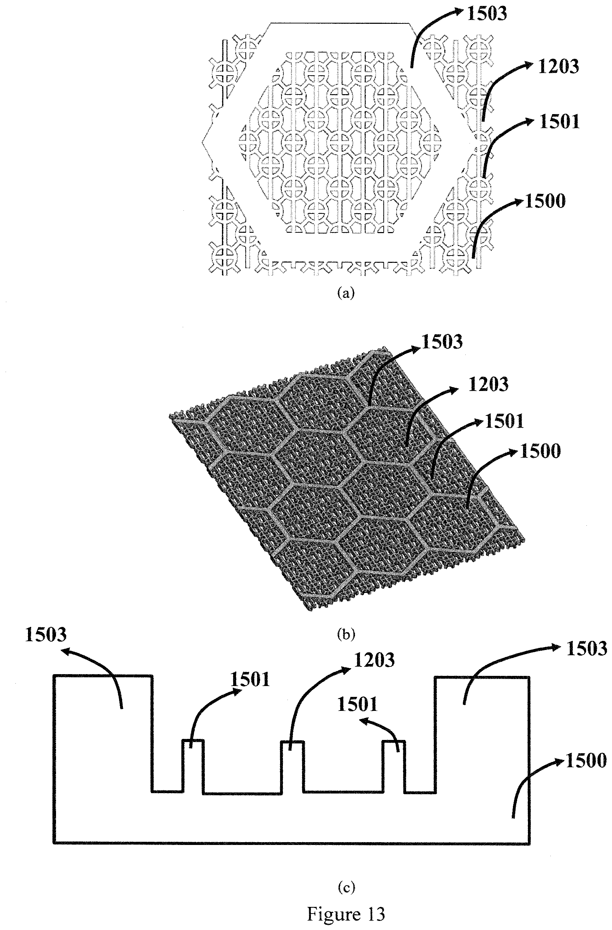

Figs. 13(a) - 13(c): Are graphical illustrations of the circular ring pattern with inner stripe patterns and outer stripe patterns that arranged in hexagonal array across the whole area of the sample surface with the honeycomb guard ring pattern. Fig. 13(a) is a top-view graphical illustration image. Fig. 13(b) is a side view graphical illustration image. Fig. 13(c) is a cross-sectional view graphical illustration image of the dimension of each component.

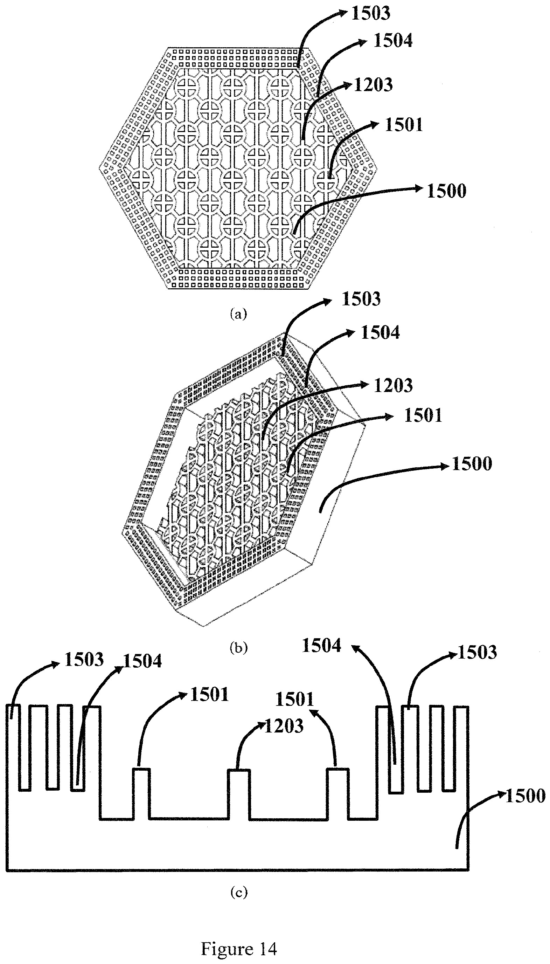

Figs. 14(a) - 14(c): Are graphical illustrations of circular ring pattern with inner stripe patterns and outer stripe patterns that arranged in hexagonal array across the whole area of the sample surface with the honeycomb guard ring pattern and air trap hole pattern array. Fig. 14(a) is a top-view graphical illustration image. Fig. 14(b) is a side view graphical illustration image. Fig. 14(c) is a cross-sectional view graphical illustration image of the dimension of each component.

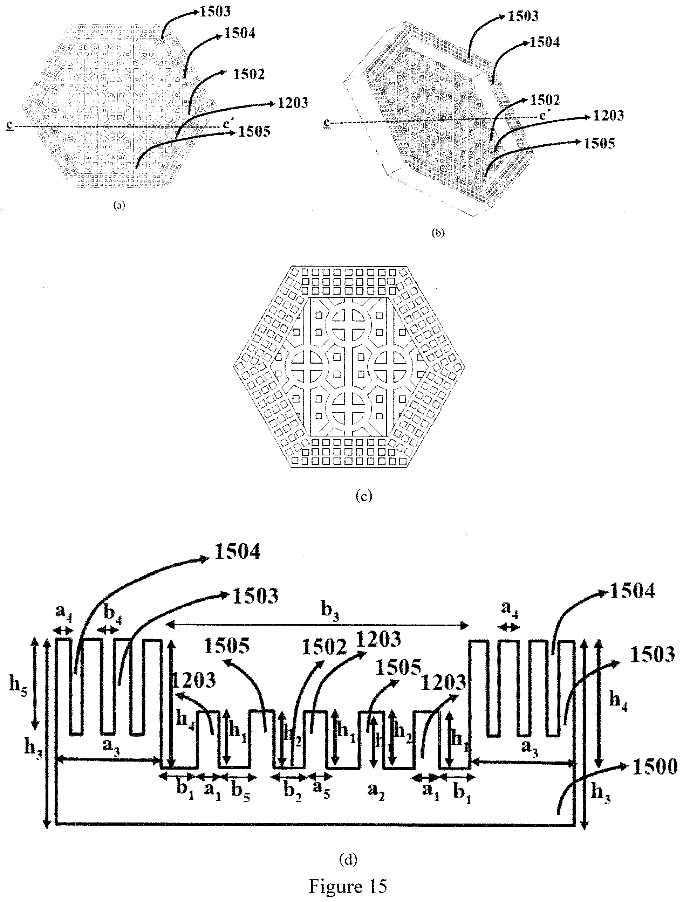

Fig. 15(a) - 15(d): Are graphical illustrations of circular ring pattern with inner stripe patterns and outer stripe patterns that arranged in hexagonal array across the whole area of the sample surface with pillar pattern, honeycomb guard ring pattern and air trap hole array. Fig. 15(a) is a top-view graphical illustration image. Fig. 15(b) is a side view graphical illustration image. Fig. 15(c) is a top-view of cross-sectional view graphical illustration image. Fig. 15(d) is a cross-sectional view graphical illustration image of the dimension of each component.

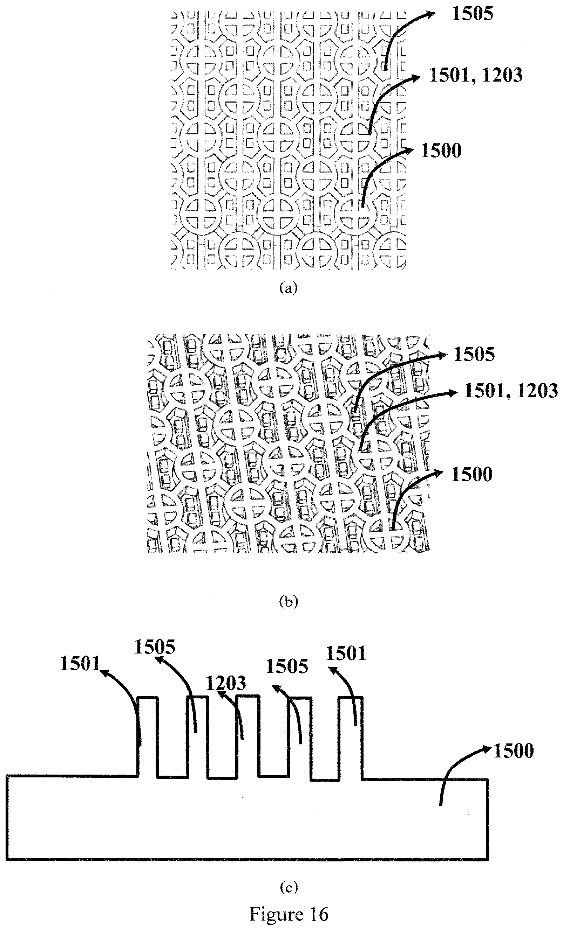

Fig. 16(a) - 16(c): Are graphical illustrations of circular ring pattern with inner stripe patterns and outer stripe patterns that arranged in hexagonal array across the whole area of the sample surface with pillar pattern. Fig. 16(a) is a top-view graphical illustration image. Fig. 16(b) is a side view graphical illustration image. Fig. 16(c) is a cross-sectional view graphical illustration image of the dimension of each component.

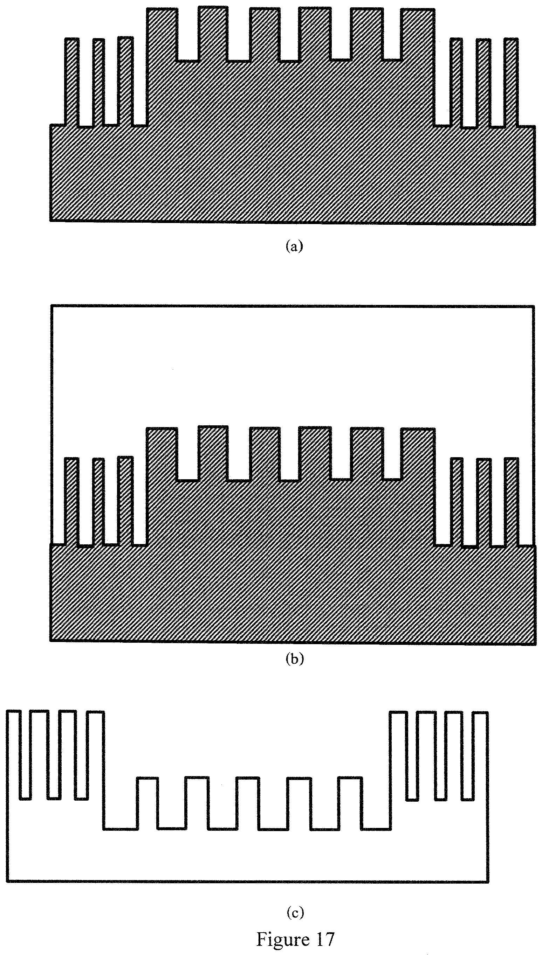

Fig. 17(a) - 17(c): Are graphical illustrations of the robust pattern by using soft lithography with silicon mold. Fig. 17(a) is a pattern on silicon mold. Fig. 17(b) is a silicon mold casting with soft materials. Fig. 17(c) is a robust pattern that replicate from the silicon mold.

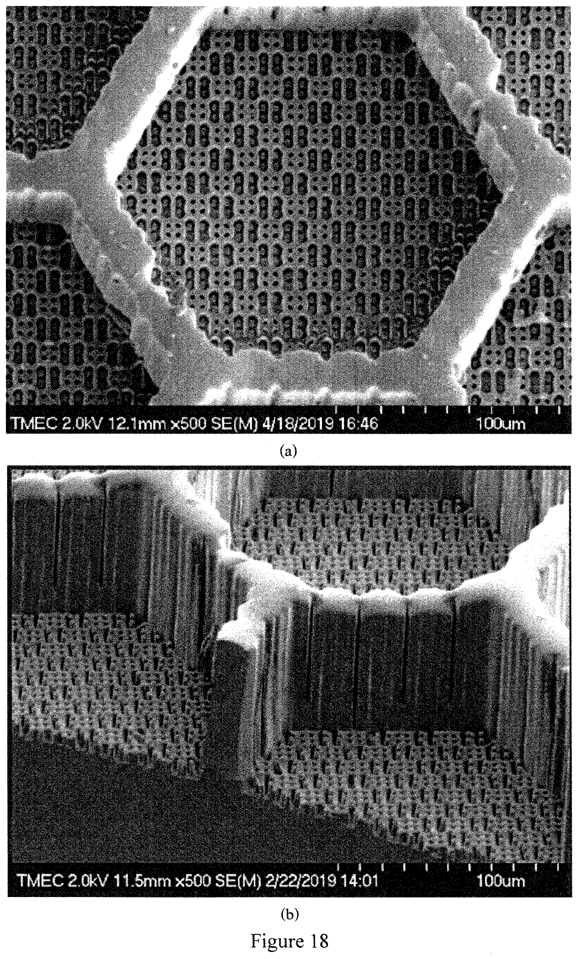

Figs. 18(a)-18(b): Are scanning electron microscopy (SEM) images of robust PDMS pattern with the guard ring pattern that comprises of air-trap hole pattern array. Fig. 18(a) is a top-view SEM images and 18(b) is a cross-sectional SEM image.

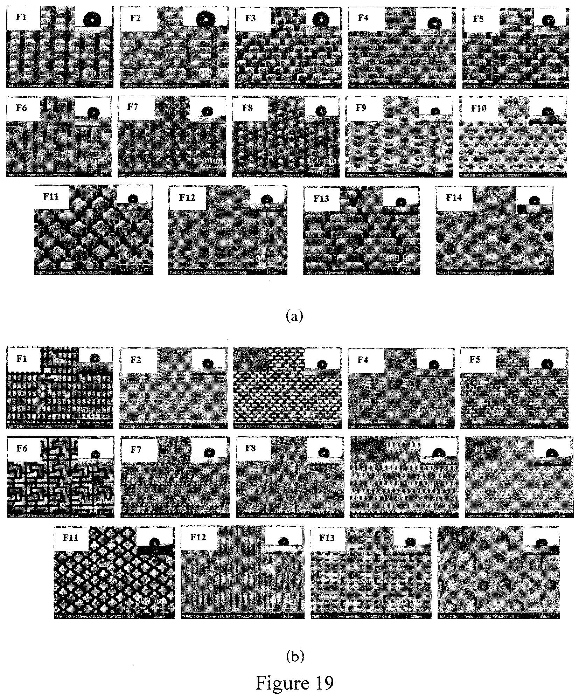

Fig. 19(a)-19(b): Are scanning electron microscopy (SEM) images of various PDMS patterns (F1 to F14 patterns) before and after scratch test with glass slide that move back and forth for 30 times. Fig. 19(a) is water contact angle and 19(b) is suppression of the water contact angle after scratch tested.

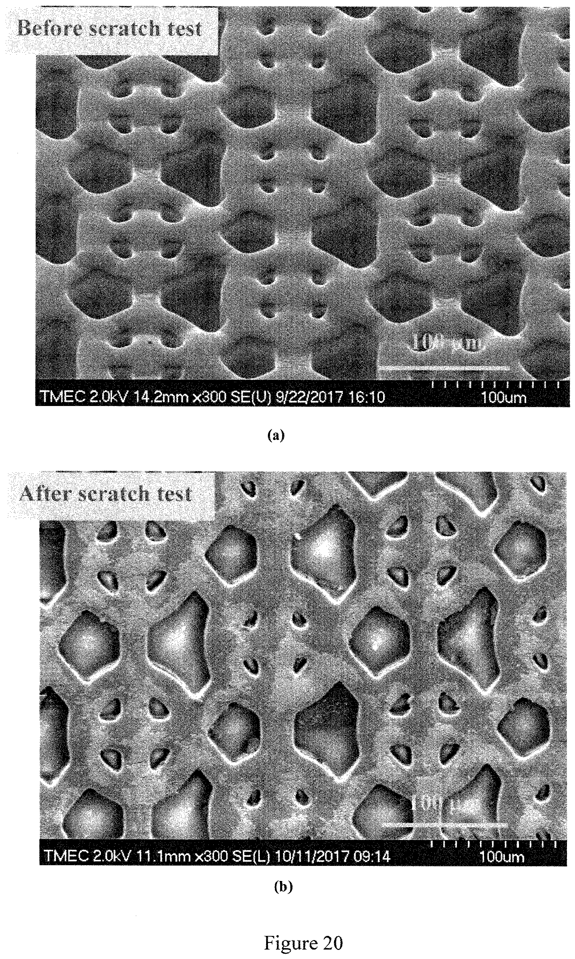

Fig. 20(a)-20(b): Are scanning electron microscopy (SEM) images of PDMS with robust pattern that comprises of circular ring pattern, pillar pattern and hexagonal guard ring pattern. Fig. 20(a)is before scratch test with glass slide that move back and forth for 30 times and Fig. 20(b) is after scratch test with glass slide that move back and forth for 30 times

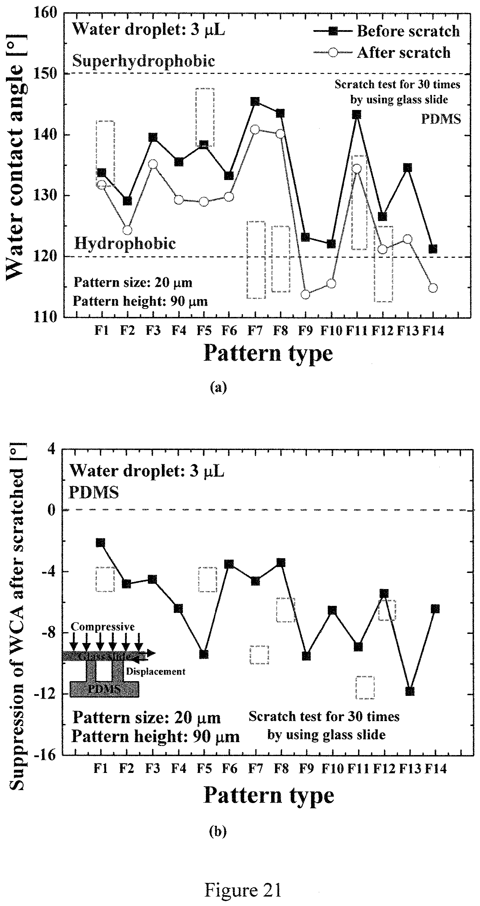

Fig. 21(a)-21(b): Are graphs between the water contact angle on various PDMS patterns (F1 to F14 patterns) before and after scratch test with glass slide that move back and forth for 30 times. Fig. 21(a) is water contact angle and Fig. 21(b) is suppression of the water contact angle after scratch tested.

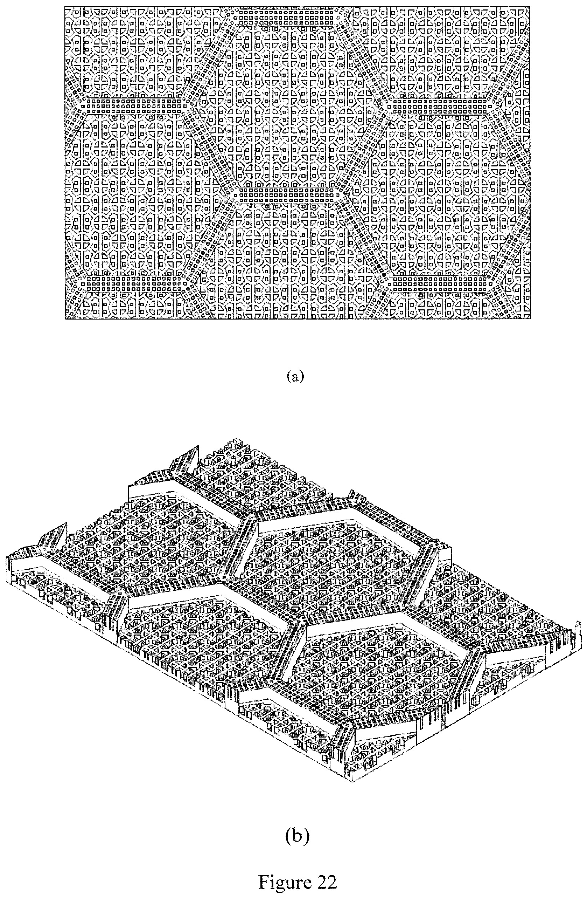

Fig. 22(a)-22(b): Are graphical illustrations of robust pattern array with circular ring pattern, inner stripe patterns, outer stripe patterns, pillar patterns and multiple hexagonal guard ring pattern with air trap hole pattern array. Fig. 22(a) is a top-view graphical illustration image and Fig. 22(b) is a side-view graphical illustration image.

**Detailed description of the invention**

As mentioned, there is disclosed a material for an antifouling surface. In one aspect of the invention, the material comprises a substrate, a first pattern located on the substrate, and a second pattern identical and adjacent to the first pattern, the first pattern comprising one circular ring pattern and multiple stripes, wherein the multiple stripes comprise: at least two inner stripes that are located within the circular ring pattern, and intersect the diameter of the circular ring pattern, and at least four outer stripes, such as four to eight outer stripes, that are located outside the circular ring pattern, wherein each outer stripe of the at least four outer stripes comprises a proximal end and a distal end, wherein the proximal end is proximal to and in contact with the circular ring pattern, and the distal end is distal to the one circular ring pattern and in contact with the second pattern to form a pattern array.

In one embodiment, the first pattern comprises eight stripes with two inner stripes that form a cross (or "plus sign") within the circular ring pattern, and six outer stripes that are located outside the circular ring pattern, wherein the proximal ends of the six outer stripes are in contact with the circular ring pattern.

In one embodiment, the material further comprises at least one guard ring pattern having a width ($a_3$) that is between 1 to 200 times of the width of circular ring pattern (ai), and a height ($h_4$) that is at least 1.5 times of the height of the circular ring pattern ($h_1$).

In one embodiment, the height ($h_4$) that is at least 2 times of the height of the circular ring pattern ($h_1$).

In this embodiment, the material comprises at least one guard ring pattern wherein the top surface of the guard ring pattern contains at least a hole pattern having a width ($b_4$) that is not less than the width of circular ring pattern (ai), the hole pattern further having a depth ($h_5$) that is equal to or less than the height of the guard ring pattern ($h_4$). The guard ring can have any geometric shape, with a square shape and a hexagonal shape of particular interest. In an embodiment, the total area of guard ring pattern is equal to greater than 1x1 square millimeter, such as between 1x1 and 10x10 square millimeters.

The material described herein may further comprise at least one pillar pattern that is located between adjacent circular ring patterns, or between circular ring patterns and outer stripe patterns in a pattern array.

In one embodiment, the circular ring pattern comprises an outer diameter and an inner diameter, wherein the outer diameter ($a_6$) is at least five times greater than the width of the stripe pattern (as), and the inner diameter ($a_7$) is at least three times greater than the width of the stripe pattern ($a_5$).

In one embodiment, four of the outer stripes are tilted at 30-60 degrees compared to a vertical base line, such as at 45 degrees compared to a vertical base line. As used herein, a "vertical base line" is defined as a line that intersects the center of the circular ring pattern in the vertical direction.

In one embodiment, two of the six outer stripes are not tilted and are approximately 90 degrees compared to a horizontal base line. As used herein, a "horizontal base line" is defined as a line that intersects the center of the circular ring pattern in a horizontal direction

In one embodiment, the material described herein is flexible and selected from the group of polydimethylsiloxane, polyurethane, acrylate, lacquer, polypropylene, polymethyl methacrylate, rubber, elastomer and the combination thereof.

In one embodiment, the pattern array has superhydrophobic and superoleophobic properties.

In another embodiment, there is described a material for an antifouling surface. In this embodiment, the material comprises a substrate; and a first pattern located on the substrate that is connected to at least one identical adjacent second pattern to form a pattern array, wherein the first pattern comprises one circular ring pattern and eight stripes with two inner stripes located with the circular ring pattern, and six outer stripes that are located outside the circular ring pattern. In an embodiment, the outer stripes comprise a proximal end and a distal end, wherein the proximal end is proximal to and in contact with the circular ring pattern, the distal end is distal to the circular ring pattern and in contact with the second pattern to form the pattern array. This embodiment may further comprise at least one guard ring pattern that has a pattern height higher than that of all the components of pattern array to protect the pattern array from direct contact and direct impact of the external forces, wherein the top surface of the guard ring pattern contains at least a hole pattern that can generate an air trap and produce superhydrophobic and superoleophobic properties on the surface of guard ring pattern. It is understood that this embodiment may further comprise at least one pillar pattern that is located between the adjacent of circular ring patterns or inside circular ring pattern, or between the circular ring pattern and the guard ring pattern, or the combination thereof, wherein the pillar pattern can increase a surface roughness and decrease the portion of the flat surface area of the pattern array.

In one embodiment, the material described herein has the following configuration:

a circular ring pattern, wherein the height of circular ring pattern ($h_1$) is less than the total thickness of the pattern array ($h_3$) that used to fabricate the materials with pattern, and the ratio between the height ($h_1$) and the width of circular ring pattern ($a_1$) or aspect ratio (AR) of the pattern array is equal to or greater than one ($h_1/a_1 >\_ 1.0$), and the distance between the outer circular ring pattern and inner guard ring pattern (1503) or called $b_1$ is equal or greater than the width of circular ring pattern ($a_1$) ($b_1 >\_ a_1$), and the height of circular ring pattern ($h_1$) is greater than the width of circular ring pattern ($a_1$) ($h_1 \geq a_1$);

for the guard ring pattern, the height of the guard ring pattern ($h_4$) is at least 1.5 times of the height of the circular ring pattern (hi), the height of guard ring pattern ($h_4$) is less than the thickness of the substrate ($h_3$) but greater than the height of circular ring pattern (hi), and greater than the height of pillar pattern ($h_2$), the width of guard ring pattern ($a_3$) is between 1 to 200 times of the width of the circular ring pattern (ai), the ratio between the height of guard ring pattern ($h_4$) and the width of guard ring pattern ($a_3$) or the aspect ratio of the guard ring pattern is equal to or greater than 1.0, and the maximum distance between two opposite edges of the guard ring pattern ($b_3$) is greater than the sum of the width of circular ring pattern (a1) and two times of the distance between the outer circular ring pattern and inner guard ring pattern (b1), (b3 > (a1+2b1));

for the pillar pattern, the width of pillar pattern ($a_2$) is less than the sum of distance between the width of stripe patterns ($a_5$) and two times of the space between stripe pattern and the pillar pattern ($b_2$), or $a_2 < (a_5 + 2b_2)$, the height of pillar pattern ($h_2$) is equal to or less than the height of circular ring pattern (hi), and the ratio between the height of pillar pattern ($h_2$) and the width of pillar pattern ($a_2$) is equal or greater than 1.0, ($h_2/a_2 \geq 1.0$), and the width of pillar pattern ($a_2$) is equal or less than the space between stripe pattern and the pillar pattern ($b_2$) ($a_2 <\_ b_2$),

for the hole pattern that is located inside the area of guard ring pattern, the width of hole pattern ($b_4$) is less than the width of the guard ring pattern ($a_3$) or $b_4 < a_3$, and the width of the guard ring pattern ($a_3$) greater than the distance between hole patterns ($a_4$) ($a_3 > a_4$), and the width of hole pattern ($b_4$) is equal or less than the distance between hole patterns ($a_4$) ($b_4 \leq a_4$), and the depth of hole pattern ($h_5$) is equal to or less than the height of guard ring pattern ($h_4$) or $h_5 \leq h_4$, and the ratio between the depth of hole pattern ($h_5$) and the width of hole pattern ($b_4$) is equal or greater than 1.0 ($h_5/a_4 \geq 1.0$).

In an embodiment, the height ($h_4$) that is at least 2 times of the height of the circular ring pattern ($h_1$).

In an embodiment, the material described herein is defined wherein the thickness of pattern array ($h_3$) in the

range of 50 nanometer to 3 millimeters.

In an embodiment, the material described herein is defined wherein the guard ring pattern, the pillar pattern, and hole pattern can have any geometric shape.

The material described herein may be flexible and selected from the group of polydimethylsiloxane, polyurethane, acrylate, lacquer, polypropylene, polymethyl methacrylate, rubber, elastomer and the combination thereof.

An example of a material that comprises four different pattern components may have dimensions as follows;

(1) The circular ring pattern (1501) that comprises two inner stripe patterns and six outer stripe patterns (1102), (1103), (1104), (1105), (1106), (1107), (1108) and (1109) as shown in Fig. 11. The height of circular ring pattern, inner stripe patterns and outer stripe patterns are same. The purpose of the pattern is to increase strength and surface roughness to produce superhydrophobic and oleophobic properties. The pattern is arranged in the square and hexagonal array as shown in Fig. 12.

(2) The guard ring pattern (1503) is used as a supporter to prevent an external force directly attaching to or impacting the other patterns that are located inside the guard ring area (1500) and (1501). Therefore, the guard ring pattern protects a pillar pattern from mating or collapsing by an external force as shown in Fig. 13.

(3) The hole pattern (1504) generates an air-trap on the guard ring pattern (1503) that surrounds the circular ring pattern with inner and outer stripe patterns (1500) and (1501) as shown in Fig. 14. The air-trap creates superhydrophobic properties on the guard ring pattern surface as follows to the Cassie and Baxter's model. This air-trap can prevent the fouling of bio-organism on the surface of the guard ring pattern.

(4) The pillar pattern (1505) that is located between the space of circular ring pattern (1501) and (1502) that is surrounded by the guard ring pattern (1503) with an air-trap (1504) as shown in Fig. 15. This structure is used to increase a surface roughness and decrease the flat surface in the space area of circular ring pattern.

A pattern that comprises the circular ring pattern (1501) that has inner stripe patterns, outer stripe patterns and pillar pattern (1505) on the substrate (1500) is shown in Fig. 16.

A pattern that comprises with four different pattern components may have dimensions as follows;

(1) The pattern is fabricated on the substrate (1500) with the substrate thickness of $h_3$ where $h_3$ is in the range of 50 nanometer to 3.0 millimeter (50 nm $\leq h_3 \leq$ 3mm). The substrate material is not limited to metal, polymer, elastomer and semiconductor such as silicon wafer.

(2) The circular ring pattern with inner stripe patterns (1102, 1103) and outer stripe patterns (1104, 1105, 1106, 1107, 1108, 1109) with the width of circular ring pattern ($a_1$) and the height of circular ring pattern ($h_1$) where $a_1 \leq$ 2 $\mu$m and $h_1 < h_3$ and $h_1 \geq a_1$. In the other hands, the aspect ratio (AR) is greater than 1.0 ($h_1/a_1 \geq$ 1.0). The distance between the outer circular ring pattern and inner guard ring pattern ($b_1$) is equal or greater than the width of circular ring pattern ($a_1$) ($b_1 \geq a_1$)

The circular ring pattern in Fig. 15 has the maximum distance between two opposite inner edges of the guard ring pattern ($b_3$) is greater than the sum of the width of circular ring pattern ($a_1$) and two times of the distance between the outer circular ring pattern and inner guard ring pattern ($b_1$), ( $b_3 > (a_1+2b_1)$). The circular ring pattern comprises two inner stripe patterns (1102, 1103) is located at the diameter of the circular ring pattern (1501) and the other six outer stripe patterns (1104, 1105, 1106, 1107, 1108, 1109) are located outside the circular ring pattern (1501).

The two inner stripe patterns (1102, 1103) have an arrangement is similar to the plus sign at the center of the circular ring pattern as shown in Fig. 11 (1102) and (1103).

The outer stripe patterns (1104), (1105), (1106) and (1107) have an arrangement of the pattern has rotated with the angle $\theta_L$ related to the horizon line. Those outer stripe patterns (1104), (1105), (1106) and (1107) are connected to the adjacent patterns as shown in Fig. 11. The $\theta_L$ is equal to 45 degrees.

The outer stripe pattern (1108) and (1109) have an arrangement of the pattern is perpendicular to the horizon line with the angle $\theta_L$ of 90 degrees. Those outer stripe patterns (1108) and (1109) are connected to the adjacent circular ring patterns as shown in Fig. 11.

The distance between the outer circular ring pattern and inner guard ring pattern ($b_1$) is equal or greater than the width of circular ring pattern ($a_1$) ($b_1 \geq a_1$). The circular ring pattern comprises with inner stripe patterns and outer stripe patterns and arrange in Hexagonal array across the whole surface area of the substrate.

(3) Guard ring pattern (1503) is not limited to the geometry shapes such as circular shape, square shape, pentagonal shape, hexagonal shape and octagonal shape,

wherein the height of guard ring pattern ($h_4$) must be higher than the height of circular ring pattern ($h_1$) when the height of guard ring pattern ($h_4$) is less than the total thickness of the pattern array ($h_3$) ($h_4 < h_3$), the width of guard ring pattern ($a_3$) is equal or less than 200 times of the width of circular ring pattern ($a_1$) but equal

or greater than the width of circular ring pattern ($a_1$) ($a_1 \leq a_3 \leq 200a_1$) ,
the ratio between the height of guard ring pattern ($h_4$) and the width of guard ring pattern ($a_3$) is equal to or greater than 1.0 ($h_4/a_3 \geq 1.0$) and
the maximum distance between two opposite inner edges of the guard ring pattern ($b_3$) is greater than the sum of the width of circular ring pattern ($a_1$) and two times of the distance between the outer circular ring pattern and inner guard ring pattern ($b_1$), ($b_3 > (a_1 + 2b_1)$).

(4) Pillar pattern (1505) that is located in the space area (1502) of circular ring pattern (1501) wherein

the width of pillar pattern ($a_2$) is equal or less than the space between stripe pattern and the pillar pattern ($b_2$) ($a_2 \leq b_2$),
the width of pillar pattern ($a_2$) is less than the sum of distance between the width of stripe patterns ($a_5$) and two times of the space between stripe pattern and the pillar pattern ($b_2$), or $a_2 < (a_5 + 2b_2)$,
the height of circular ring pattern ($h_1$) is less than the total thickness of the pattern array ($h_3$) but equal or greater than the height of pillar pattern ($h_2$) ($h_2 \leq h_1 < h_3$) and
the ratio between the height of pillar pattern ($h_2$) and the width of pillar pattern ($a_2$) is equal or greater than 1.0, ($h_2/a_2 \geq 1.0$).

The shape of pillar pattern (1505) is not limited to the geometry shapes such as circular shape, square shape, pentagonal shape, hexagonal shape and octagonal shape.

(5) Hole pattern or air-trap pattern (1504) that is located on the top surface of guard ring pattern (1503) wherein

the width of the guard ring pattern ($a_3$) is greater than the distance between hole patterns ($a_4$) ($a_3 > a_4$),

the width of hole pattern ($b_4$) is equal or less than the distance between hole patterns ($a_4$) ($b_4 \leq a_4$),

the depth of hole pattern ($h_5$) is equal to or less than the height of guard ring pattern ($h_4$), ($h_5 \leq h_4$) and

the ratio between the depth of hole pattern ($h_5$) and the width of hole pattern ($b_4$) is equal or greater than 1.0 ($h_5/a_4 \geq 1.0$).

The shape of hole pattern (1504) is not limited to the geometry shapes such as circular shape, square shape, pentagonal shape, hexagonal shape and octagonal shape.

The material for an antifouling surface may be comprised of four components. This pattern may have at least two different pattern heights. The height of circular ring pattern (1501) may be equal or greater than that of pillar pattern (1505). The height of both circular ring pattern and pillar pattern may be lower than the height of guard ring pattern (1503).

The specific characteristic of this pattern is that the surface is comprised of guard ring pattern with the size of 1 to 200 times greater than the other patterns on the surface. The height of the guard ring pattern may be at least two times higher than the height of the other patterns. Moreover, the top surface of guard ring pattern may comprise an air-trap hole pattern. The depth of the hole pattern may be equal or less than the height of guard ring pattern. Those patterns may be arranged in square or hexagonal array across the material surface.

The CAD layout of the robust patterns shown in Fig. 15 may be used to fabricate a photomask, which used as a prototype for conventional photolithography process to produce a pattern on silicon mold.

For the fabrication of the sample with the inventive robust pattern, there is described a method to fabricate robust pattern that comprises of circular ring pattern, outer strip pattern, inner stripe pattern and pillar pattern that are arranged in a square array. This pattern comprises hexagonal honeycomb guard ring pattern with air-trap hole pattern array on its surface. The silicon dioxide ($SiO_2$) thin film will be used as a hard mask layer during an etching process.

First, the 6 inch silicon wafer is used as a substrate to fabricate a silicon mold. The silicon wafer was cleaned by standard cleaning (SC-1) process to remove the contaminants from the surface. Then, 5.0 micron thick silicon dioxide ($SiO_2$) film was deposited on the silicon wafer by using Plasma Enhance Chemical Vapor Deposition (PECVD) method. The oxide layer is used as a hard mask for the deep silicon etching process. Later the 2.0 micron photoresist film was coated on the oxide layer by using spin coating method. The circular ring pattern with outer stripe pattern and inner stripe pattern were transferred from the photomask to the photoresist film by using contact mask aligner. The energy and focus distance will be optimized to control the pattern shape and pattern size similar to the CAD design. After hard bake process, the photoresist pattern was transferred to the beneath oxide layer by using reactive ion etching (RIE) process with the etch depth of $h_1$. The remained photoresist was stripped by using Piranha acid solution ($H_2SO_4$: $H_2O_2$ = 4:1%wt) at 120 degree Celsius for 20 min and rinse with deionized water (DIW) for 10 min.

The second patterning process was done to transfer pillar pattern in the space area of circular ring pattern. After coating 2.0 micron thick photoresist, the alignment process was done before exposure with suitable exposure dose and contact distance. The RIE process was used to etch oxide layer to produce pillar pattern. Later, the pattern on the oxide layer was transferred to the silicon surface by using deep RIE (DRIE) method with the etch depth of $h_2$. The remained photoresist film was then removed again by using Piranha acid solution at 120 degree Celsius and rinse with DIW for 10 min. After this process, the whole silicon wafer was etched by using DRIE method to increase the etch depth of $h_1$ and $h_2$ on the circular ring pattern and pillar pattern array. Then the oxide hard mask was etched from the silicon wafer by using hydrofluoric acid (HF).

Therefore, the silicon mold is comprised of the fabricated circular ring pattern with inner and outer stripe patterns (1501) and pillar pattern (1505) as shown in Fig. 15.

Next, the high aspect ratio guard ring pattern with inner and outer stripe patterns (1503) and hole pattern (1504) were fabricated. In this process, 5.0 micron thick photoresist film was applied on the patterned silicon wafer. The guard ring pattern with the size of $a_4$ and hole pattern with the depth of $h_5$ was patterned by contact mask aligner. This pattern was etched into the silicon wafer surface by using DRIE.

Regarding to the loading effects for the different pattern density between guard ring pattern and hole pattern. The etching rate of those patterns were different. Therefore, the height of guard ring pattern ($h_3$) is greater than the depth of hole pattern ($h_4$) by using a single etching process. The remained photoresist film was then removed again by using Piranha acid solution at 120 degree Celsius and rinse with DIW for 10 min. Then the oxide hard mask was etched from the silicon wafer by using hydrofluoric acid (HF). Finally, the silicon mold with robust pattern was fabricated as the structure shown in Fig. 17 (a).

Before the replicate pattern by using soft lithography process, the PDMS was mixed with curing agent at the weight ratio of 10:1. The mixture was stirred until it becomes homogeneous. Later, the PDMS mixture was put in the vacuum chamber to remove the air bubbles from the mixed solution. The silicon mold surface has also been prepared by priming the surface with hexamethyldisilaxane (HMDS) as a mold releasing agent. The HMDS will change the surface of silicon mold from hydrophilic to hydrophobic and makes a PDMS is more easily to release from the silicon mold.

The robust pattern on the silicon mold can be transferred to the polydimethylsiloxane (PDMS) substrate by using soft lithography process. The PDMS was cast onto silicon mold surface as shown in Fig. 17 (b). After casting, the PDMS was cured in the convection oven at 90 degree Celsius for 2 hours. Then the PDMS sample was cool down in the air ambient until the temperature has decreased to room temperature. The PDMS film was released (de-molding) from the silicon mold. Therefore, the robust pattern that comprises of circular ring pattern, inner and outer stripe pattern, pillar pattern, guard ring pattern and hole pattern were completely replicated to PDMS sample as the schematic shown in Fig. 17 (c).

The properties of robust pattern were shown in Fig. 18 and Fig. 19. The top-view and side-view scanning electron microscopy (SEM) images of the robust pattern are shown in Fig. 18 (a) and Fig. 18 (b), respectively. Moreover, the water contact angle of various PDMS patterns (F1 to F14 patterns) before and after scratch test by apply the glass slide with the pressure back and forth for 30 times is shown in Fig. 19 (a). The degradation of the water contact angle of various PDMS patterns (F 1 to F14 patterns) after scratch test is shown in Fig. 19 (b). It was confirmed that robust pattern that comprises of inner and outer stripe pattern, pillar pattern and guard ring pattern can prevent the pattern mating and pattern clamping by the external forces. Moreover, the SEM images of PDMS with robust pattern that comprises of inner and outer stripe pattern, pillar pattern and hexagonal guard ring pattern before and after scratch test with glass slide that move back and forth for 30 times are shown in Fig. 20 (a) and Fig. 20 (b), respectively. Moreover, the relation between the water contact angle on various PDMS patterns (F1 to F14 patterns) before and after scratch test with glass slide that move back and forth for 30 times is shown in Fig. 21 (a). The suppression of the water contact angle on various PDMS patterns (F1 to F14 patterns) after scratch tested is shown in Fig. 21 (b). Therefore, the robust pattern can still maintain a superhydrophobic properties on its surface.

Fig. 22 shows a graphical illustration of robust pattern array with circular ring pattern, inner stripe patterns, outer stripe patterns, pillar patterns and multiple hexagonal guard ring pattern with air trap hole pattern array. (a) top-view graphical illustration image and (b) side-view graphical illustration image.

In this invention, all the pattern size was demonstrated in micrometer scale. However, the size of robust pattern is not limited to the micrometer scale but covered to the pattern with the size in millimeter and centimeter scale too.

## Claims

1. A material for an antifouling surface, said material comprising:

   a substrate (1500);
   a first pattern (1000) located on the substrate, and
   a second pattern identical and adjacent to the first pattern, the first pattern (1000) comprising one circular ring pattern (1501) and multiple stripes (1104, 1105, 1106, 1107, 1108, 1109);

wherein the multiple stripes comprise:

at least two inner stripes (1102, 1103) that are located within the circular ring pattern (1501), and intersect the diameter of the circular ring pattern (1501), and

at least four outer stripes (1104, 1105, 1106, 1107, 1108, 1109) that are located outside the circular ring pattern (1501), wherein each outer stripe of the at least four outer stripes (1104, 1105, 1106, 1107, 1108, 1109) comprises a proximal end and a distal end, wherein the proximal end is proximal to and in contact with the one circular ring pattern (1501), the distal end is distal to the one circular ring pattern (1501) and in contact with said second pattern to form a pattern array.

2. The material of claim 1, wherein the outer stripes (1104, 1105, 1106, 1107, 1108, 1109) have 4 to 8 stripes, and preferably wherein the first pattern (1000) comprises eight stripes with two inner stripes (1102, 1103) that form a cross within the circular ring pattern (1501), and six outer stripes (1104, 1105, 1106, 1107, 1108, 1109) that are located outside the circular ring pattern, wherein the proximal ends of the six outer stripes (1104, 1105, 1106, 1107, 1108, 1109) are in contact with the circular ring pattern (1501).

3. The material of claim 1, further comprising at least one guard ring pattern (1503) having a width ($a_3$) that is between 1 to 200 times of a width of the circular ring pattern (ai), and a height ($h_4$) that is at least 1.5 times of a height of the circular ring pattern ($h_1$), and preferably wherein the top surface of said guard ring pattern (1503) contains at least a hole pattern (1504) having a width ($b_4$) that is not less than the width of circular ring pattern ($a_1$), the hole pattern further having a depth ($h_5$) that is equal to or less than the height of the guard ring pattern ($h_4$).

4. The material according to any one of claims 1 to 3, further comprising at least one pillar pattern (1505) that is located between adjacent circular ring patterns, or between circular ring patterns and outer stripe patterns in the pattern array.

5. The material of claim 1, wherein the circular ring pattern comprises an outer diameter ($a_6$) and an inner diameter ($a_7$), wherein the outer diameter ($a_6$) is at least five times greater than a width of the stripe pattern ($a_5$), and the inner diameter ($a_7$) is at least three times greater than the width of the stripe pattern ($a_5$).

6. The material of any one of claims 1 or 2, wherein four (1104, 1105, 1106, 1107) of the outer stripes are tilted at 30-60 degrees compared to the vertical base line, and preferably wherein the four (1104, 1105, 1106, 1107) outer stripes are tilted at 45 degrees compared to the vertical base line.

7. The material of any one of claims 2 to 6, wherein two (1108, 1109) of the outer stripe patterns are not tilted and are located approximately 90 degrees to the horizontal base line.

8. The material of claim 3, wherein the guard ring pattern has a square shape or a hexagonal shape, and optionally wherein the total area of guard ring pattern is equal to greater than 1x1 square millimeter.

9. The material of any preceding claim, wherein the pattern array has superhydrophobic and superoleophobic properties.

10. The material of claim 1, wherein said material further comprises:

at least one guard ring pattern (1503) that has a pattern height higher than that of all the components of the pattern array arranged to protect the pattern array from direct contact and direct impact of the external forces, wherein the top surface of said guard ring pattern (1503) contains at least a hole pattern (1504) arranged to generate an air trap and produce superhydrophobic and superoleophobic properties on the surface of guard ring pattern,

further comprising at least one pillar pattern (1505) that located between the adjacent of circular ring patterns, or inside circular ring pattern, or between the circular ring pattern and the guard ring pattern, or the combination thereof, wherein the at least one pillar pattern is arranged to increase a surface roughness and decrease the portion of the flat surface area of pattern array.

11. The material of claim 10, further comprising a hole pattern that is located inside the area of guard ring pattern,

wherein a height of circular ring pattern ($h_1$) is less than a total thickness of the pattern array ($h_3$) used to fabricate the materials of the pattern,

the height of circular ring pattern ($h_1$) is greater than a width of circular ring pattern ($a_1$) ($h_1 \geq a_1$),

a ratio between the height ($h_1$) and the width of circular ring pattern ($a_1$) is equal to or greater than one ($h_1/a_1 \geq 1.0$), and

a distance between the outer circular ring pattern and an inner guard ring pattern ($b_1$) is equal to or greater than the width of circular ring pattern ($a_1$) ($b_1 \geq a_1$);

wherein a height of the guard ring pattern ($h_4$) is at least 1.5 times of the height of the circular ring pattern (hi), the height of the guard ring pattern ($h_4$) is less than the thickness of the substrate ($h_3$) but greater than the height of circular ring pattern (hi), and greater than a height of the at least one pillar pattern ($h_2$),

a width of guard ring pattern ($a_3$) is between 1 to 200 times of the width of circular ring pattern (ai),

the ratio between the height of guard ring pattern ($h_4$) and the width of guard ring pattern ($a_3$) is equal to or greater than 1.0, and

a maximum distance between two opposite inner edges of the guard ring pattern ($b_3$) is greater than the sum of the width of circular ring pattern ($a_1$) and two times of the distance between the outer circular ring pattern and inner guard ring pattern ($b_1$), ($b_3 > (a_1+2b_1)$); and

wherein the width of pillar pattern ($a_2$) is less than the sum of distance between the width of stripe patterns ($a_5$) and two times of the space between stripe pattern and the pillar pattern ($b_2$), or $a_2 < (a_5 + 2b_2)$,

the height of pillar pattern ($h_2$) is equal to or less than the height of circular ring pattern ($h_1$),

the width of pillar pattern ($a_2$) is equal or less than the space between stripe pattern and the pillar pattern ($b_2$) ($a_2 \leq b_2$),

the ratio between the height of pillar pattern ($h_2$) and the width of pillar pattern ($a_2$) is equal or greater than 1.0, ($h_2/a_2 \geq 1.0$); and

wherein a width of hole pattern ($b_4$) is less than the width of the guard ring pattern (as),

the width of the guard ring pattern (a3) greater than the distance between hole patterns ($a_4$) ($a_3 > a_4$),

a width of hole pattern ($b_4$) is equal or less than the distance between hole patterns ($a_4$) ($b_4 \leq a_4$),

a depth of hole pattern ($h_5$) is equal to or less than the height of guard ring pattern ($h_4$), and

a ratio between the depth of hole pattern ($h_5$) and the width of hole pattern ($b_4$) is equal or greater than 1.0.

12. The material of claim 10, wherein the thickness of pattern array ($h_3$) in the range of 50 nanometers to 3 millimeters.

13. The material of claim 10, wherein the guard ring pattern, the pillar pattern, and hole pattern can have any geometric shape.

14. The material of any one of claims 1-9 or claims 10-13, wherein the material is flexible and selected from a group consisting of polydimethylsiloxane, polyurethane, acrylate, lacquer, polypropylene, polymethyl methacrylate, rubber, elastomer and any combination thereof, and preferably wherein the material is polydimethylsiloxane.

15. The material of claim 3 or claim 11, wherein the height ($h_4$) that is at least 2 times of the height of the circular ring pattern ($h_1$).

**Patentansprüche**

1. Material für eine Antifouling-Oberfläche, wobei das Material umfasst:

ein Substrat (1500);
ein erstes Muster (1000), das sich auf dem Substrat befindet, und
ein zweites Muster, das mit dem ersten Muster identisch und diesem benachbart ist, wobei das erste Muster (1000) ein Kreisringmuster (1501) und mehrere Streifen (1104, 1105, 1106, 1107, 1108, 1109) umfasst;
wobei die mehreren Streifen umfassen:

mindestens zwei innere Streifen (1102, 1103), die sich innerhalb des Kreisringmusters (1501) befinden und den Durchmesser des Kreisringmusters (1501) schneiden, und
mindestens vier äußere Streifen (1104, 1105, 1106, 1107, 1108, 1109), die sich außerhalb des Kreisringmusters (1501) befinden, wobei jeder äußere Streifen der mindestens vier äußeren Streifen (1104, 1105, 1106, 1107, 1108, 1109) ein proximales Ende und ein distales Ende umfasst, wobei das proximale Ende proximal zu dem einen Kreisringmuster (1501) ist und mit diesem in Kontakt steht, das distale Ende distal zu dem einen Kreisringmuster (1501) ist und in Kontakt mit dem zweiten Muster steht, um eine Musteranordnung zu bilden.

2. Material nach Anspruch 1, wobei die äußeren Streifen (1104, 1105, 1106, 1107, 1108, 1109) 4 bis 8 Streifen aufweisen, und vorzugsweise wobei das erste Muster (1000) acht Streifen mit zwei inneren Streifen (1102, 1103), die innerhalb des Kreisringmusters (1501) ein Kreuz bilden, und sechs äußeren Streifen (1104, 1105, 1106, 1107, 1108, 1109), die sich außerhalb des Kreisringmusters befinden, umfasst, wobei die proximalen Enden der sechs äußeren Streifen (1104, 1105, 1106, 1107, 1108, 1109) mit dem Kreisringmuster (1501) in Kontakt stehen.

3. Material nach Anspruch 1, ferner umfassend mindestens ein Schutzringmuster (1503) mit einer Breite ($a_3$), die zwischen dem 1- und 200-fachen der Breite des Kreisringmusters ($a_1$) liegt, und einer Höhe ($h_4$), die mindestens das 1,5-fache der Höhe des Kreisringmusters ($h_1$) beträgt, und vorzugsweise wobei die obere Oberfläche des Schutzringmusters (1503) mindestens ein Lochmuster (1504) mit einer Breite ($b_4$) enthält, die nicht kleiner als die Breite des Kreisringmusters ($a_1$) ist, wobei das Lochmuster ferner eine Tiefe ($h_5$) aufweist, die gleich oder kleiner als die Höhe des Schutzringmusters ($h_4$) ist.

4. Material gemäß einem der Ansprüche 1 bis 3, ferner umfassend mindestens ein Säulenmuster (1505), das sich zwischen benachbarten Kreisringmustern oder zwischen Kreisringmustern und äußeren Streifenmustern in der Musteranordnung befindet.

5. Material nach Anspruch 1, wobei das Kreisringmuster einen Außendurchmesser ($a_6$) und einen Innendurchmesser ($a_7$) umfasst, wobei der Außendurchmesser ($a_6$) mindestens fünfmal größer als eine Breite des Streifenmusters ($a_5$) ist und der Innendurchmesser ($a_7$) mindestens dreimal größer als die Breite des Streifenmusters ($a_5$) ist.

6. Material nach einem der Ansprüche 1 oder 2, wobei vier (1104, 1105, 1106, 1107) der äußeren Streifen im Vergleich zur vertikalen Grundlinie um 30-60 Grad geneigt sind, und vorzugsweise wobei die vier (1104, 1105, 1106, 1107) äußeren Streifen im Vergleich zur vertikalen Grundlinie um 45 Grad geneigt sind.

7. Material nach einem der Ansprüche 2 bis 6, wobei zwei (1108, 1109) der äußeren Streifenmuster nicht geneigt sind und sich etwa 90 Grad zur horizontalen Grundlinie befinden.

8. Material nach Anspruch 3, wobei das Schutzringmuster eine quadratische Form oder eine sechseckige Form aufweist, und optional wobei die Schutzringmuster-Gesamtfläche gleich bis größer als 1 x 1 Quadratmillimeter ist.

9. Material nach einem der vorhergehenden Ansprüche, wobei die Musteranordnung superhydrophobe und superoleophobe Eigenschaften aufweist.

10. Material nach Anspruch 1, wobei das Material ferner umfasst:

mindestens ein Schutzringmuster (1503), das eine höhere Musterhöhe als die aller Komponenten der Musteranordnung aufweist und so angeordnet ist, dass es die Musteranordnung vor direktem Kontakt und direkter Einwirkung externer Kräfte schützt,
wobei die obere Oberfläche des Schutzringmusters (1503) mindestens ein Lochmuster (1504) enthält, das so angeordnet ist, dass es eine Luftfalle erzeugt und superhydrophobe und superoleophobe Eigenschaften auf der Schutzringmusteroberfläche hervorruft,
ferner umfassend mindestens ein Säulenmuster (1505), das sich zwischen den benachbarten von Kreisringmustern oder innerhalb des Kreisringmusters oder zwischen dem Kreisringmuster und dem Schutzringmuster oder der Kombination davon befindet, wobei das mindestens eine Säulenmuster so angeordnet ist, dass es eine Oberflächenrauheit erhöht und den Teil der flachen Musteranordnungsoberfläche verringert.

11. Material nach Anspruch 10, ferner umfassend ein Lochmuster, das sich innerhalb der Schutzringmusterfläche befindet,

wobei eine Höhe des Kreisringmusters ($h_1$) kleiner als eine Gesamtdicke der Musteranordnung ($h_3$) ist, die zur Herstellung der Materialien des Musters verwendet wird,
die Höhe des Kreisringmusters ($h_1$) größer als eine Breite des Kreisringmusters ($a_1$) ist ($h_1 \geq a_1$), das Verhältnis zwischen der Höhe ($h_1$) und der Breite des Kreisringmusters ($a_1$) gleich oder größer als eins ist ($h_1/a_1 \geq 1{,}0$) und ein Abstand zwischen dem äußeren Kreisringmuster und einem inneren Schutzringmuster ($b_1$) gleich oder größer als die Breite des Kreisringmusters ($a_1$) ist ($b_1 \geq a_1$);
wobei eine Höhe des Schutzringmusters ($h_4$) mindestens das 1,5-fache der Höhe des Kreisringmusters ($h_1$) beträgt,

die Höhe des Schutzringmusters ($h_4$) kleiner als die Dicke des Substrats ($h_3$), jedoch größer als die Höhe des Kreisringmusters ($h_1$) und größer als eine Höhe des mindestens einen Säulenmusters ($h_2$) ist,

eine Breite des Schutzringmusters (a3) das 1- bis 200-fache der Breite des Kreisringmusters ($a_1$) beträgt,

das Verhältnis zwischen der Höhe des Schutzringmusters ($h_4$) und der Breite des Schutzringmusters ($a_3$) gleich oder größer als 1,0 ist und

ein maximaler Abstand zwischen zwei gegenüberliegenden Innenkanten des Schutzringmusters ($b_3$) größer als die Summe der Breite des Kreisringmusters ($a_1$) und des Zweifachen des Abstands zwischen dem äußeren Kreisringmuster und dem inneren Schutzringmuster ($b_1$), ($b_3 > (ai+2bi)$) ist; und wobei die Breite des Säulenmusters ($a_2$) kleiner als die Summe des Abstands zwischen der Breite des Streifenmusters ($a_5$) und dem Zweifachen des Raumes zwischen Streifenmuster und dem Säulenmuster ($b_2$), oder $a_2 < (a_5 + 2b_2)$ ist,

die Höhe des Säulenmusters ($h_2$) gleich oder kleiner als die Höhe des Kreisringmusters ($h_1$) ist, die Breite des Säulenmusters ($a_2$) gleich oder kleiner als der Raum zwischen Streifenmuster und Säulenmuster ($b_2$) ($a_2 \leq b_2$) ist,

das Verhältnis zwischen der Höhe des Säulenmusters ($h_2$) und der Breite des Säulenmusters ($a_2$) gleich oder größer als 1,0 ist ($h_2/a_2 \geq 1,0$); und

wobei eine Lochmusterbreite ($b_4$) kleiner als die Breite des Schutzringmusters ($a_3$) ist, die Breite des Schutzringmusters ($a_3$) größer als der Abstand zwischen Lochmustern ($a_4$) ist ($a_3 > a_4$),

eine Breite des Lochmusters ($b_4$) gleich oder kleiner als der Abstand zwischen Lochmustern ($a_4$) ist ($b_4 \leq a_4$),

eine Tiefe des Lochmusters ($h_5$) gleich oder kleiner als die Höhe des Schutzringmusters ($h_4$) ist, und

ein Verhältnis zwischen der Tiefe des Lochmusters ($h_5$) und der Breite des Lochmusters ($b_4$) gleich oder größer als 1,0 ist.

12. Material nach Anspruch 10, wobei die Dicke der Musteranordnung ($h_3$) im Bereich von 50 Nanometern bis 3 Millimetern liegt.

13. Material nach Anspruch 10, wobei das Schutzringmuster, das Säulenmuster und das Lochmuster jede beliebige geometrische Form aufweisen können.

14. Material nach einem der Ansprüche 1-9 oder 10-13, wobei das Material flexibel ist und aus einer Gruppe ausgewählt ist, die aus Polydimethylsiloxan, Polyurethan, Acrylat, Lack, Polypropylen, Polymethylmethacrylat, Gummi, Elastomer und einer beliebigen Kombination davon besteht, und vorzugsweise wobei das Material Polydimethylsiloxan ist.

15. Material nach Anspruch 3 oder Anspruch 11, wobei die Höhe ($h_4$), die mindestens das 2-fache der Höhe des Kreisringmusters ($h_1$) beträgt.

**Revendications**

1. Matériau pour une surface antisalissure, ledit matériau comprenant :

un substrat (1500) ;
un premier motif (1000) situé sur le substrat, et
un deuxième motif identique et adjacent au premier motif, le premier motif (1000) comprenant un motif d'anneau circulaire (1501) et des bandes multiples (1104, 1105, 1106, 1107, 1108, 1109) ;
dans lequel les bandes multiples comprennent :

au moins deux bandes intérieures (1102, 1103) qui sont situées à l'intérieur du motif d'anneau circulaire (1501) et qui coupent le diamètre du motif d'anneau circulaire (1501), et
au moins quatre bandes extérieures (1104, 1105, 1106, 1107, 1108, 1109) qui sont situées à l'extérieur du motif d'anneau circulaire (1501), dans lequel chaque bande extérieure des au moins quatre bandes extérieures (1104, 1105, 1106, 1107, 1108, 1109) comprend une extrémité proximale et une extrémité distale, dans lequel l'extrémité proximale est proximale à et en contact avec le motif d'anneau circulaire donné (1501), l'extrémité distale est distale du motif d'anneau circulaire donné (1501) et en contact avec ledit deuxième motif pour former un réseau de motifs.

2. Matériau selon la revendication 1, dans lequel les bandes extérieures (1104, 1105, 1106, 1107, 1108, 1109) comportent de 4 à 8 bandes, et de préférence dans lequel le premier motif (1000) comprend huit bandes avec deux bandes intérieures (1102, 1103) qui forment une croix à l'intérieur du motif d'anneau circulaire (1501), et six bandes extérieures (1104, 1105, 1106, 1107, 1108, 1109) qui sont situées à l'extérieur du motif d'anneau circulaire, dans lequel les extrémités proximales des six bandes extérieures (1104, 1105, 1106, 1107, 1108, 1109) sont en contact avec le motif d'anneau circulaire (1501).

3. Matériau selon la revendication 1, comprenant en outre au moins un motif d'anneau de garde (1503) comportant une largeur ($a_3$) qui est comprise entre 1 et 200 fois une largeur du motif d'anneau circulaire (ai), et une hauteur ($h_4$) qui est au moins 1,5 fois une hauteur du motif d'anneau circulaire (hi), et de préférence dans lequel la surface supérieure dudit motif d'anneau de garde (1503) contient au moins un motif de trou (1504) comportant une largeur ($b_4$) qui n'est pas inférieure à la largeur du motif d'anneau circulaire (ai), le motif de trou comportant en outre une profondeur ($h_5$) qui est égale ou inférieure à la hauteur du motif d'anneau de garde ($h_4$).

4. Matériau selon l'une quelconque des revendications 1 à 3, comprenant en outre au moins un motif de pilier (1505) qui est situé entre des motifs d'anneaux circulaires adjacents, ou entre des motifs d'anneaux circulaires et des motifs de bandes extérieures dans le réseau de motifs.

5. Matériau selon la revendication 1, dans lequel le motif d'anneau circulaire comprend un diamètre extérieur ($a_6$) et un diamètre intérieur ($a_7$), dans lequel le diamètre extérieur ($a_6$) est au moins cinq fois supérieur à une largeur du motif de bande (as), et le diamètre intérieur ($a_7$) est au moins trois fois supérieur à la largeur du motif de bande ($a_5$).

6. Matériau selon l'une quelconque des revendications 1 ou 2, dans lequel quatre (1104, 1105, 1106, 1107) des bandes extérieures sont inclinées à 30 à 60 degrés par rapport à la ligne de base verticale, et de préférence dans lequel les quatre (1104, 1105, 1106, 1107) bandes extérieures sont inclinées à 45 degrés par rapport à la ligne de base verticale.

7. Matériau selon l'une quelconque des revendications 2 à 6, dans lequel deux (1108, 1109) des motifs de bandes extérieures ne sont pas inclinés et sont situés à environ 90 degrés par rapport à la ligne de base horizontale.

8. Matériau selon la revendication 3, dans lequel le motif d'anneau de garde comporte une forme carrée ou une forme hexagonale, et éventuellement dans lequel la surface totale du motif d'anneau de garde est égale à plus de 1 x 1 millimètre carré.

9. Matériau selon l'une quelconque des revendications précédentes, dans lequel le réseau de motifs comporte des propriétés superhydrophobes et superoléophobes.

10. Matériau selon la revendication 1, dans lequel ledit matériau comprend en outre :

au moins un motif d'anneau de garde (1503) qui comporte une hauteur de motif supérieure à celle de tous les composants du réseau de motifs agencés pour protéger le réseau de motifs d'un contact direct et d'un impact direct de forces extérieures,
dans lequel la surface supérieure dudit motif d'anneau de garde (1503) contient au moins un motif de trou (1504) agencé pour générer un piège à air et produire des propriétés superhydrophobes et superoléophobes sur la surface du motif d'anneau de garde,
comprenant en outre au moins un motif de pilier (1505) qui est situé entre ceux adjacents des motifs d'anneaux circulaires, ou à l'intérieur du motif d'anneau circulaire, ou entre le motif d'anneau circulaire et le motif d'anneau de garde, ou la combinaison de ces positions, dans lequel l'au moins un motif de pilier est agencé pour augmenter une rugosité de surface et diminuer la partie de la zone de surface plane du réseau de motifs.

11. Matériau selon la revendication 10, comprenant en outre un motif de trou qui est situé à l'intérieur de la zone du motif d'anneau de garde,

dans lequel une hauteur du motif annulaire circulaire ($h_1$) est inférieure à une épaisseur totale du réseau de motifs ($h_3$) utilisé pour fabriquer les matériaux du motif,
la hauteur du motif d'anneau circulaire ($h_1$) est supérieure à une largeur du motif d'anneau circulaire (a1) ($h_1 \geq a_1$),
un rapport entre la hauteur ($h_1$) et la largeur du motif d'anneau circulaire (a1) est égal ou supérieur à un ($h_1/a_1 \geq 1,0$), et
une distance entre le motif d'anneau circulaire extérieur et un motif d'anneau de garde intérieur ($b_1$) est égale ou supérieure à la largeur du motif d'anneau circulaire (a1) ($b_1 \geq a_1$) ;
dans lequel une hauteur du motif d'anneau de garde ($h_4$) est au moins 1,5 fois la hauteur du motif d'anneau circulaire (hi),

la hauteur du motif d'anneau de garde ($h_4$) est inférieure à l'épaisseur du substrat ($h_3$) mais supérieure à la hauteur du motif d'anneau circulaire (hi), et supérieure à une hauteur de l'au moins un motif de pilier ($h_2$),

une largeur du motif d'anneau de garde ($a_3$) est comprise entre 1 et 200 fois la largeur du motif d'anneau circulaire (ai),

le rapport entre la hauteur du motif d'anneau de garde ($h_4$) et la largeur du motif d'anneau de garde ($a_3$) est égal ou supérieur à 1,0, et

une distance maximale entre deux bords intérieurs opposés du motif d'anneau de garde ($b_3$) est supérieure à la somme de la largeur du motif d'anneau circulaire ($a_1$) et de deux fois la distance entre le motif d'anneau circulaire extérieur et le motif d'anneau de garde intérieur ($b_1$), ($b_3 >$ (ai+2bi)) ; et

dans lequel la largeur du motif de pilier ($a_2$) est inférieure à la somme de la distance entre la largeur des motifs de bandes ($a_5$) et de deux fois l'espace entre le motif de bande et le motif de pilier ($b_2$), ou $a_2 < (a_5 + 2b_2)$,

la hauteur du motif de pilier ($h_2$) est égale ou inférieure à la hauteur du motif d'anneau circulaire (hi),

la largeur du motif du pilier ($a_2$) est égale ou inférieure à l'espace entre le motif de bande et le motif de pilier ($b_2$) ($a_2 \leq b_2$),

le rapport entre la hauteur du motif de pilier ($h_2$) et la largeur du motif de pilier ($a_2$) est égal ou supérieur à 1,0, ($h_2/a_2 \geq 1,0$) ; et

dans lequel une largeur du motif de trou ($b_4$) est inférieure à la largeur du motif d'anneau de garde ($a_3$),

la largeur du motif d'anneau de garde ($a_3$) est supérieure à la distance entre les motifs de trous (a4) ($a_3 > a_4$),

une largeur de motif de trou ($b_4$) est égale ou inférieure à la distance entre les motifs de trous ($a_4$) ($b_4 \leq a_4$),

une profondeur du motif de trou ($h_5$) est égale ou inférieure à la hauteur du motif d'anneau de garde ($h_4$), et

un rapport entre la profondeur du motif de trou ($h_5$) et la largeur du motif de trou ($b_4$) est égal ou supérieur à 1,0.

12. Matériau selon la revendication 10, dans lequel l'épaisseur du réseau de motifs ($h_3$) est comprise entre 50 nanomètres et 3 millimètres.

13. Matériau selon la revendication 10, dans lequel le motif d'anneau de garde, le motif de pilier et le motif de trou peuvent avoir n'importe quelle forme géométrique.

14. Matériau selon l'une quelconque des revendications 1 à 9 ou des revendications 10 à 13, dans lequel le matériau est souple et choisi dans un groupe constitué de polydiméthylsiloxane, polyuréthane, acrylate, laque, polypropylène, polyméthacrylate de méthyle, caoutchouc, élastomère et toute combinaison de ceux-ci, et de préférence dans lequel le matériau est du polydiméthylsiloxane.

15. Matériau selon la revendication 3 ou la revendication 11, dans lequel la hauteur ($h_4$) qui est au moins 2 fois supérieure à la hauteur du motif d'anneau circulaire ($h_1$).

|     |     |     |     |     |
| --- | --- | --- | --- | --- |
| (1) | (2) | (3) | (4) | (5) |
| Initial | Irreversible | Initial | Final | Dispersion |
| attachment | attachment | growth | growth | |

Figure 1

Figure 2

Figure 3

Figure 4

502 402

503 403

501 401

504 404

Substrate

**Superhydrophobic**
$\theta_w > 150°$

**Hydrophobic**
$90° \leq \theta_w \leq 150°$

**Hydrophilic**
$0° \leq \theta_w \leq 90°$

Figure 5

603 )3

602 2

601 1

Substrate

Figure 6

Figure 7

Figure 8

Figure 9

Figure 10

Figure 11

1203

1501

1500

(a)

1203

1501

1500

(b)

1501    1203    1501

1500

(c)

Figure 12

1503
1203
1501
1500

(a)

1503
1203
1501
1500

(b)

1503
1501
1203
1501
1503
1500

(c)

Figure 13

1503
1504
1203
1501
1500

(a)

1503
1504
1203
1501
1500

(b)

1503  1504
1501
1504  1503
1501
1203
1500

(c)

Figure 14

(a)

(b)

(c)

(d)

Figure 15

(a)

(b)

(c)

Figure 16

(a)

(b)

(c)

Figure 17

TMEC 2.0kV 12.1mm x500 SE(M) 4/18/2019 16:46    100um

(a)

TMEC 2.0kV 11.5mm x500 SE(M) 2/22/2019 14:01    100um

(b)

Figure 18

(a)

(b)

Figure 19

(a)

(b)

Figure 20

(a)

(b)

Figure 21

(a)

(b)

Figure 22

## REFERENCES CITED IN THE DESCRIPTION

### Patent documents cited in the description

- US 6852390 B2
- US 20050181195 A1
- US 20070005024 A1
- WO 02084340 A
- US 200200334879 A
- US 5725788 A
- US 6444254 B
- US 5900160 A
- US 5609907 A
- US 5252835 A
- US 6530554 B
- US 6518168 B
- US 6514389 B
- US 20030047822 A
- US 20020098135 A
- US 20060097361 A1
- US 20060078724 A1
- US 7150904 B2
- US 7323033 B2
- US 20070224391 A1
- US 7650848 B2
- US 20100126404 A1
- TH 1701003836
- WO 2010022107 A
- WO 2018085376 A
- WO 2017025128 A
- WO 2018197858 A

### Non-patent literature cited in the description

- **G. D. BIXLER ; B. BHUSHAN.** Biofouling: lessons from nature. *Phil. Trans. R. Soc.,* 2012, vol. A 370, 2381-2417
- **J.A. CALLOW ; M.E. CALLOW.** Trends in the development of environmentally friendly fouling-resistant marine coatings. *Nature Communications,* 2011, vol. 2, 1-10
- **B. ANTIZAR-LADISLAO.** Environmental levels, toxicity and human exposure to tributyltin (TBT)-contaminated marine environment. A review. *Environ. Int.,* 2008, vol. 34 (2), 292-308
- **J. GENZER ; K. EFIMENKO.** Recent developments in superhydrophobic surfaces and their relevance to marine fouling'' A review. *Biofouling,* 2006, vol. 22 (5), 3 3 9-3 6 0
- **I. BANERJEE ; R.C. PANGULE ; R.S. KANE.** Antifouling coatings: Recent developments in the design of surfaces that prevent fouling by proteins, bacteria, and marine organisms. *Adv. Mater.,* 2011, vol. 23, 690-718
- **T. VLADKOVA ; D. AKUZOV ; A. KLOPPEL ; F. BRUMMER.** Current approaches to reduction of marine biofilm formation. *J. Chem. Technol. and Metallurgy,* 2014, vol. 49 (4), 345-355
- **M. V. GRAHAM ; N. C. CADY.** Nano and microscale topographies for the prevention of bacterial surface fouling. *Coatings,* 2014, vol. 4, 37-59
- Scanning electron microscopy of the epidermal surface in plants. **W. BARTHLOTT.** Application of the scanning EM in taxonomy and functional morphology. Systematics Association's Special Volume. Clarendon Press, 1990, 69-94
- **M. MA ; M.H. RANDAL.** *Superhydrophobic surfaces, Current opinion in colloid & interface science,* 2006, vol. 11, 193-202
- **R. N. WENZEL.** *Resistance of solid surfaces to wetting by water, Indus. and Eng. Chem.,* 1936, vol. 28 (8), 988-994
- **CASSIE, A. ; BAXTER, S.** Wettability of porous surfaces. *Trans. Faraday Soc.,* 1944, vol. 40, 546-555
- **J. L. ZHANG.** *Macromol. Rapid Commun.,* 2004, vol. 25, 1105
- **M. T. KHORASANI.** *Appl. Surf. Sci.,* 2005, vol. 242, 339
- **X. Y. LU.** *Macromol. Rapid Commun.,* 2004, vol. 25, 1606
- **X. J. FENG.** *J. Am. Ceram. Soc.,* 2004, vol. 126, 62
- **X. J. FENG et al.** *Angew. Chem. Int. Ed.,* 2005, vol. 44, 5115
- Dynamic wettability switching by surface roughness effect. *the 16th IEEE MEMS conference,* 2003
- Fabrication and analysis of enforced dry adhesives with core-shell micropillars. *Soft Matter,* 2013, vol. 9, 1422-1427